# EUROPEAN PATENT SPECIFICATION

(11) **EP 2 050 343 B1**
(45) Date of publication and mention of the grant of the patent: **28.10.2015**
(21) Application number: 07739781.8
(22) Date of filing: 27.03.2007
(51) Int. Cl.: A23G 9/22, A23G 9/20

(54) **ICE CONFECTION PRODUCING DEVICE AND ICE CONFECTION PRODUCING METHOD**
GERÄT FÜR DIE HERSTELLUNG VON EISKONFEKT, UND VERFAHREN FÜR DIE HERSTELLUNG VON EISKONFEKT
DISPOSITIF DE PRODUCTION DE CONFISERIE GLACÉE ET PROCÉDÉ DE PRODUCTION DE CONFISERIE GLACÉE

(30) Priority: 27.06.2006 JP 2006177095
(43) Date of publication of application: 22.04.2009
(73) Proprietor: Nissei Company, Ltd., Osaka 567-0042 (JP)
(72) Inventor: NAKAJIMA, Noriaki c/o Takatsuki Plant of NISSEI COMPANY, LTD, Osaka 569-0093 (JP); TEZUKA, Masahiro c/o Takatsuki Plant of NISSEI COMPANY, LTD, Osaka 569-0093 (JP); NOZU, Takeshi c/o Takatsuki Plant of NISSEI COMPANY, LTD, Osaka 569-0093 (JP); SATOU, Akinori c/o Takatsuki Plant of NISSEI COMPANY, LTD, Osaka 569-0093 (JP)
(74) Representative: Petruzziello, Aldo
(86) International application number: PCT/JP2007/056343
(87) International publication number: WO 2008/001520

(56) References cited:
- EP-A2- 0 729 707
- JP-A- 2002 176 923
- JP-B1- 37 018 583
- JP-U- 63 173 090
- JP-Y2- 2 516 955
- US-A- 3 050 960
- US-A- 3 719 056
- US-A- 5 016 446
- US-B1- 6 301 918

## Description

### TECHNICAL FIELD

The present invention relates to a technique for producing ice confections such as a semisolid ice confection typified by a soft serve ice cream, in particular, to an ice confection producing device which produces or stores ice confection by stirring or cooling ingredients of the ice confection or the ice confection so as to extrude the ice confection as required.

### BACKGROUND ART

In general, semisolid ice confections such as a soft serve ice cream and a shake are produced, stored, and sold on site by using an ice confection producing device including a cooling cylinder. In such an ice confection producing device, (i) ingredients of ice confection are supplied to a cooling cylinder; (ii) an ice confection is produced by stirring and cooling the ingredients; and (iii) the ice confection thus produced is stirred and cooled appropriately so as to be stored therein. Namely, the quality of an ice confection is maintained, by repeating cooling and stirring of the ice confection stored inside the ice confection producing device at regular intervals until the ice confection is supplied outside the ice confection producing device.

The ice confection thus produced is extruded by using an ice confection supplying path via which the cooling cylinder and an ice confection outlet facing outside are connected with each other. An open-close member such as a plunger allows the ice confection supplying path to open or close. In an opening state of the open-close member, the ice confection is extruded from the ice confection outlet by press force (by application of pressure) that causes the ice confection to be pushed from the cooling cylinder to the ice confection outlet. On the other hand, during producing or storing of the ice confection, the ice confection supplying path is in a closing state.

Unlike the cooling cylinder, the ice confection supplying path is not arranged so as to stir and cool an ice confection. Moreover, the ice confection supplying path is provided close to the ice confection outlet, so that the ice confection supplying path is affected by outside air temperature, unlike inside the cooling cylinder. Therefore, if the elapsed time is long before the ice confection is supplied, then the ice confection inside the ice confection supplying path will melt. This causes the melted ice confection to be discharged at a burst and to be scattered around when the press force is applied to the melted ice confection while the open-close member is in the opening state. Moreover, residual ice confection inside the ice confection supplying path is scattered around most drastically, when the press force is applied to the ice confection while (i) ingredients of an ice confection are stirred and cooled so that the ice confection is produced, and (ii) the open-close member is in the opening state. As a result, it is necessary for an operator to clean up the scattered ice confection, replace corn cups, wash hands, and replace or clean cloths.

In order to solve the above problems, several kinds of techniques have been proposed. For example, Patent Document 1 discloses a technique in which a controlling device is provided for controlling a beater which stirs inside a cooling cylinder. According to the technique, open-close means controls an extruding path for extruding ice confection from the cooling cylinder to open or close. The controlling device controls the open-close means to open the extruding path, and then controls the beater to move. As a result, it is possible to prevent ice confection pressured by the beater from blowing out from the extruding path that has just started to open.

Further, Patent Document 2 discloses a technique of forming an entrance of an extruding path which is widely open toward a cooling cylinder. With this technique, an ice confection, which is located in a front end of the cooling cylinder and is stirred by a rotation of the beater, enters the extruding path from one side of the entrance of the extruding path, moves inside the path, and goes out from another side of the entrance so that the ice confection circulates. Therefore, it is possible to prevent and restrain the ice confection from staying inside the extruding path and from melting. This allows effective elimination of a problem that a melted ice confection blows out when it is extruded.

To attain an object of preventing leakage of a melted ice confection and decline in quality of an ice confection, another technique is proposed in which an ice confection is circulated. Specifically, as disclosed in Patent Document 3, an ice confection producing device is proposed which includes an ice confection returning path via which an ice confection is returned to a cylinder from an ice confection carrying path via which the ice confection is transported to an ice confection extruding path via which the ice confection is discharged from the cylinder. The following description deals with an ice confection producing device 201 disclosed in Patent Document 3, with reference to Fig. 11 and Fig. 12.

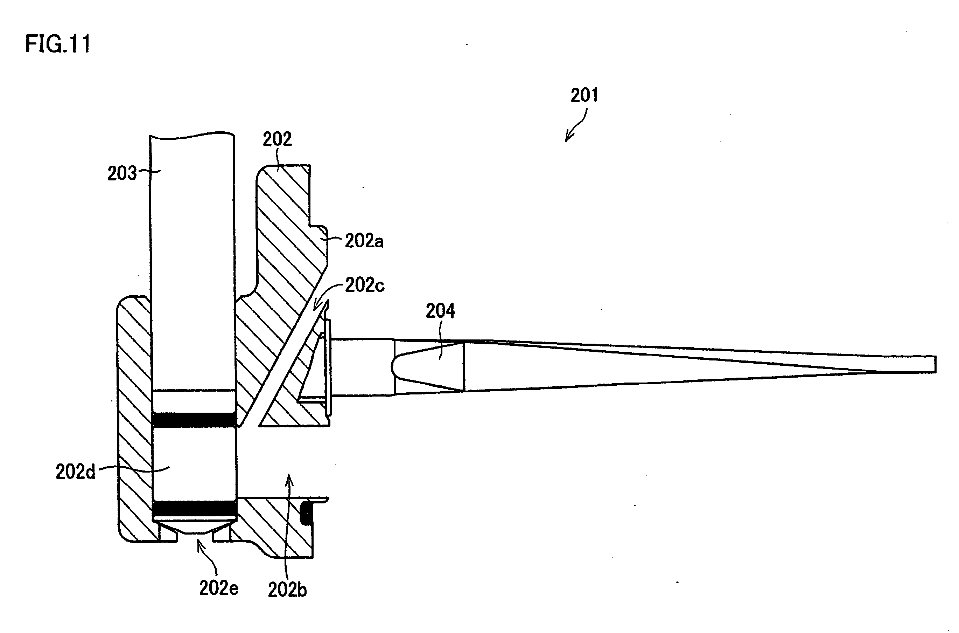

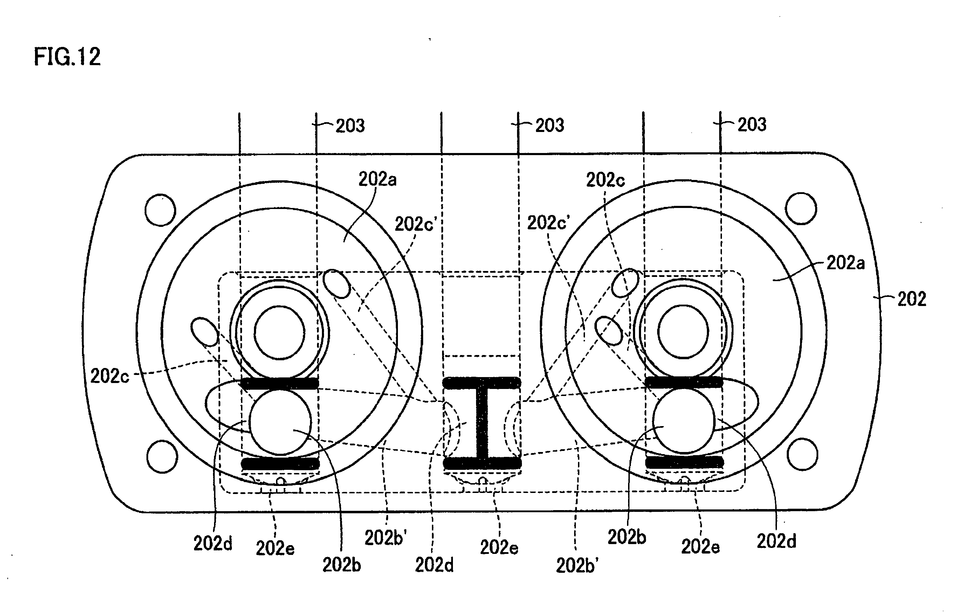

Fig. 11 is a cross-sectional view illustrating a conventional ice confection producing device. Fig. 12 is an explanatory drawing illustrating an actual structure of an ice confection returning path in the conventional ice confection producing device. In Fig. 12, the ice confection producing device includes three ice confection extruding ports 202e. Cooling and stirring members are connected to positions corresponding to right and left ice confection extruding ports 202e, respectively. An ice confection is supplied and mixed in a center ice confection extruding port 202e, via mixing main paths (ice confection carrying paths) 202b' which are connected to the cooling and stirring members on both sides, respectively.

In the ice confection producing device 201, an opening section of a cooling and stirring member (not shown) is attached to a front lid section 202. As illustrated in Fig. 11, on a surface of the front lid section 202 to which surface the cooling and stirring member is attached, a center bar 204 is attached at a center of a sealing wall 202a so as to be substantially perpendicular to the sealing wall 202a. The sealing wall 202a is a round projecting section that fits the opening section of the ice confection producing device. In the front lid section 202, a main path 202b is provided substantially perpendicular to a surface of the sealing wall 202a. The main path 202b is connected to the cooling and stirring member via a bypass (ice confection returning path) 202c which includes one end opening section connected to the main path 202b and the other end opening section connected to a surface of the sealing wall 202a. Further, the front lid section has an open-close path (ice confection extruding path) 202d, which is substantially perpendicular to the surface of the sealing wall 202a. The open-close path 202d includes a plunger 203 which controls supply of an ice confection by its open-close operation.

In a case where the plunger 203 is in an opening state, an ice confection extruded by the extruding means, which is provided in the cooling and stirring member, is discharged from the ice confection extruding port 202e, which is provided at one end of the open-close path 202d, via the main path 202b and the open-close path 202d in this order. In a case where the plunger 203 is in a closing state, the ice confection extruded by the extruding means, which is provided in the cooling and stirring member, is pushed back to the cooling and stirring member, via the main path 202b and the bypass 202c in this order.

The following description deals with an ice confection producing device which is capable of providing two different kinds of ice confections by mixture, with reference to Fig. 12. The bypass 202c connects the main paths 202b provided on both sides and the cooling and stirring members provided on both sides, respectively. As described before, one opening section of the bypass 202c is provided so as to be connected to the main path 202b, and the other opening section is provided so as to be connected to a surface of the sealing wall 202a. A mixing bypass 202c' connects (i) the cooling and stirring members which are provided on both sides and (ii) the mixing main path 202b' which connects the center open-close paths 202d and respective one of the main paths 202b which are provided on both sides. One opening section of the mixing bypass 202c' is provided so as to be connected to the mixing main path 202b' and the other opening is provided so as to be connected to a surface of the sealing wall 202a.

In a case where the three plungers 203 are closed, the above arrangement causes such a recycle of the ice confections that the ice confections, pushed by the extruding means provided in the cooling and stirring members on both sides, are returned to the cooling and stirring members, via the main path 202b and the bypass 202c, and the mixing main path 202b' and the mixing bypass 202c', respectively.
[Patent Document 1]: Japanese Unexamined Patent Publication, Tokukaihei, 11-127791 (date of publication: May 18, 1999), Japanese Patent No. 3728077 (date of registration: October 7, 2005)
[Patent Document 2]: Japanese Unexamined Patent Publication, Tokukai, 2002-176923 (date of publication: June 25, 2002)
[Patent Document 3]: Japanese Unexamined Utility Model Application Publication, Jitsukaihei, 5-88287 (date of publication: December 3, 1993) Japanese Utility Model Registration No. 2516955 (date of registration: August 20, 1996)

### DISCLOSURE OF INVENTION

### [OBJECT TO BE ACHIEVED BY THE INVENTION]

Out of these techniques, the technique disclosed in Patent Document 1 is able to prevent a melted ice confection from blowing out but it is not able to prevent the melting of the ice confection per se. Also, in a case where the beater operates in a standby state and while the open-close means is in an opening state, a pressured ice confection blows out. Therefore, it is difficult to say that this technique completely prevents an ice confection from blowing out.

On the other hand, the technique in Patent Document 2 causes an ice confection to continuously circulate inside the whole extruding paths. Therefore, it is possible not only to prevent the ice confection from blowing out but also to reduce the risk of melting of the ice confection inside the extruding path. However, this technique has a problem that the technique is not applicable to an ice confection producing device which takes out several kinds of ice confections by mixture. Namely, the technique is supposed to be applied to an ice confection producing device which has a single cooling cylinder. It just allows the ice confection to be circulated by changing a shape of the extruding path of such a single cooling cylinder. Moreover, according to this technique, the ice confection which is present in the extruding path cannot be re-cooled by utilizing the cooling cylinder, because the ice confection is circulated on a front side of the extruding means that is located at an end part of the beater on a front side of the device.

On the contrary, the technique in Patent Document 3 allows a mixed soft serve ice cream (for example, a mixture of chocolate flavored soft serve ice cream and vanilla flavored soft serve ice cream). In other words, Patent Document 3 discloses an ice confection producing device which is capable of serving each of different kinds of ice confections solely and is also capable of serving an ice confection by mixture (hereinafter, referred to as a multiple-kind-supply ice confection producing device for a convenience of explanation). This multiple-kind-supply ice confection producing device, as illustrated in Fig. 12, the center open-close path 202d is connected to the main paths 202b extended from the cooling and stirring members on both sides via the mixing main paths 202b', respectively. Therefore, when the technique disclosed in Patent Document 2 is applied to a multiple-kind-supply ice confection producing device, it is possible to reduce the melting of an ice confection inside the main paths 202b, however, it is not possible to prevent the ice confection inside the mixing main paths 202b' from melting.

The technique in Patent Document 3 is suitable for a multiple-kind-supply ice confection producing device. As such, it is possible to prevent an ice confection inside the main paths 202b and inside the mixing main paths 202b' from melting and leaking, or preventing from declining in quality of the ice confection, by circulating both of the ice confection in the main paths 202b and the ice confection in the mixing main paths 202b'.

The technique in Patent Document 3 is able to circulate an ice confection inside the main paths 202b and inside the mixing main paths 202b'. However, like the Patent Document 2, the technique allows the ice confection to circulate in between a stirrer and a freezer door, and therefore does not allow the ice confection to re-cool inside the cooling cylinder. In view of the circumstances, in the multiple-kind-supply ice confection producing device, a technical development has been demanded which allows the ice confection inside the main paths 202b and inside the mixing main paths 202b' to be re-cooled.

US 5,016,446 discloses a soft serve ice cream dispensing apparatus including a tank, a closure plate having an integrally formed dispensing chamber and a recirculation passageway and a dispensing valve. When the dispensing valve is closed, the recirculation passageway is not in communication with the dispensing chamber. This allows the apparatus to recirculate ice cream without causing it to flow through the dispensing chamber. During recirculation, the ice cream is recirculated in an open loop consisting of the recirculation passageway, a hollow tube and the tank. The hollow tube is in flow communication with the recirculation chamber, formed in the closure plate, and the interior of the tank and extends approximately one-third of the distance into the tank.

The present invention is made in view of the forgoing problem. An object is to provide (i) an ice confection producing device which is capable of re-cooling ice confection that is present inside an open-close path and the mixing main path while ice confection is not taken out and (ii) its representative technique for use.

### [MEANS FOR ATTAINING THE OBJECT]

As a result of diligent studies, the inventors of the present invention uniquely found that, in a case of returning ice confection to a cooling cylinder by circulation, the ice confection was pushed out from a cooling cylinder to an ice confection supplying path by extruding means, it is possible to improve circulation efficiency by efficiently using a suppress strength applied to the ice confection in consideration of its direction and intensity.

To attain the object, an ice confection producing device of the present invention as defined in claim 1, includes a cooling cylinder for storing ice confection; ice confection extruding means for pushing out the ice confection in the cooling cylinder by applying a press force on the ice confection; an ice confection supplying path for supplying the pushed out ice confection outward; open-close means for opening or closing the ice confection supplying path; and an ice confection circulating path, which is branched at least from the ice confection supplying path, for returning the ice confection to inside the cooling cylinder when the ice confection supplying path is closed by the open-close means, wherein the ice confection circulating path has a cylinder side opening section inside the cooling cylinder, and the cylinder side opening section is provided behind the ice confection extruding means with respect to the ice confection producing device.

In addition to the ice confection producing device, the present invention includes an ice confection producing method as defined in claim 5, including the following ice confection producing steps. Namely, a method for producing ice confection according to the present invention is a method for producing ice confection by using a cooling cylinder which connects to an ice confection supplying path that is openable and closable, including: a producing step of the ice confection by continuously stirring and cooling ingredients of the ice confection inside the cooling cylinder while the ice confection supplying path is in a closing state; a holding step of the ice confection by periodically stirring and cooling the ice confection inside the cooling cylinder while the ice confection supplying path is in the closing state; an extruding step of the ice confection by pushing out the ice confection from the ice confection supplying path while the ice confection supplying path is in an opening state, the ice confection being extruded while the ice confection is stirred inside the cooling cylinder; and a circulating step of the ice confection by circulating the ice confection in the ice confection supplying path to the cooling cylinder, during the producing step and the holding step, the circulating step circulating the ice confection so as to re-cool, inside the cooling cylinder, the ice confection that has started to melt in the ice confection supplying path by influence of an outside air temperature.

### [EFFECT OF THE INVENTION]

As described above, the present invention includes an ice confection circulating path which has one opening section connecting to ice confection supplying path and the other opening section connecting to a cooling cylinder. The ice confection circulating path is provided for releasing a press force to a cooling cylinder which press force is applied to an ice confection by an ice confection extruding means while an open-close means is in a closing state.

With this structure, a press force applied to the ice confection inside the cooling cylinder is smaller than a press force applied to the ice confection inside the ice confection supplying path. This makes it easier to circulate the ice confection inside the ice confection supplying path to the cooling cylinder via the ice confection circulating path. Therefore, it is possible to re-cool, inside the cooling cylinder, the ice confection that has started to melt in the ice confection supplying path by influence of the outside air temperature, thereby resulting in maintaining a certain viscosity of the ice confection. The present invention allows the ice confection inside the ice confection supplying path to be returned to the cooling cylinder so as to be re-cooled, the ice confection supplying path being susceptible to outside air temperature. Accordingly, it is possible to prevent the ice confection inside the ice confection supplying path from melting.

As a result, it is possible to prevent an ice confection from melting inside the ice confection supplying path and also prevent melted ice confection from scattering from an opening section. Moreover, it is not necessary to discard melted ice confection, thereby resulting in reduction of the waste of ingredients. This invention is particularly applicable to an ice confection producing device which has a plurality of cooling cylinders.

### BRIEF DESCRIPTION OF DRAWINGS

Fig. 1 is a partial cross-sectional view illustrating an ice confection producing device in accordance with an embodiment of the present invention.
Fig. 2 is a cross-sectional view illustrating a whole structure of the ice confection producing device illustrated in Fig. 1.
Fig. 3 is a partial cross-sectional view illustrating a flow of ice confection in the ice confection producing device while a plunger is in a closing state.
Fig. 4 is a partial cross-sectional view illustrating a flow of ice confection in the ice confection producing device while the plunger is in an opening state.
Fig. 5 is an elevation view illustrating an actual structural example of bypasses in a front lid section that is used for an ice confection producing device which is capable of mixing a plurality of kinds of ice confections.
Fig. 6 is an elevation view illustrating another actual structural example of the bypasses in the front lid section illustrated in Fig. 5.
Fig. 7 is a cross-sectional view illustrating an overview structure of an ice confection producing device in accordance with the second embodiment **which is not part** of the present invention.
Fig. 8 is a partial cross-sectional view illustrating a flow of ice confection in the ice confection producing device **not part of the invention** while the plunger is in the closing state.
Fig. 9 is a cross-sectional view illustrating an overview structure of an ice confection producing device in accordance with the third embodiment **which is not part** of the present invention.
Fig. 10 is a partial cross-sectional view illustrating a flow of ice confection in the ice confection producing device **not part of the invention** while the plunger is in the closing state.
Fig. 11 is a cross-sectional view illustrating a conventional ice confection producing device.
Fig. 12 is an elevation view illustrating an actual structure of bypasses in a front lid section that is used for the conventional ice confection producing device.

### [Explanation of Reference Numerals]

- 1, 11, 21: Ice confection producing device
- 2, 12, 22: Front lid section (lid member)
- 2a, 12a, 22a: Sealing wall
- 2b: Recessed section for the center bar
- 2c, 12c, 22c: Main path (Ice confection supplying device)
- 2c': Mixing main path (ice confection branched path)
- 2d, 12d, 22d: Bypass (ice confection circulating path)
- 2d': Mixing bypass (ice confection circulating path)
- 2d-1: Connecting opening section
- 2e, 12e, 22e: Ice confection extruding port (opening section)
- 2f, 12f, 22f: Open-close path (ice confection supplying path)
- 4: Plunger (open-close means)
- 5: Cooling cylinder
- 5, 15, 25: Center bar (rotation shaft)
- 5a, 15a, 25a: Extending bypass (extending through hole)
- 6: Stirring wing
- 6a: Auger
- 7: Blade
- 18, 28: Bushing (rotation shaft)
- 9: First insertion port
- 10: Second insertion port

### BEST MODE FOR CARRYING OUT THE INVENTION

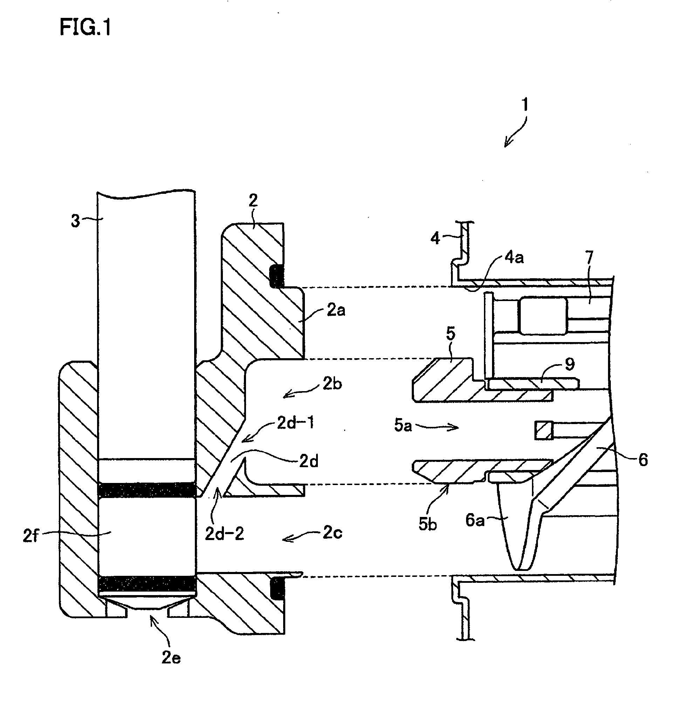

The following description deals with embodiments in accordance with the present invention with reference to Fig. 1 through Fig.**6**. Note however that the present invention is not specifically limited to **that** embodiment.

An ice confection producing device of the present invention is for producing semisolid ice confections such as a soft serve ice cream and a shake. The ice confection producing device produces an ice confection by stirring and cooling externally supplied ingredients of the ice confection. The ice confection producing device includes (i) a cooling and stirring member (cooling means and cooling cylinder) having extruding means (ice confection extruding means) for pushing out the ice confection, (ii) a supplying path (ice confection supplying path), which extends from the cooling and stirring member to outside, for supplying outward the ice confection pushed out from the cooling and stirring member by the extruding means, and (iii) a lid section including an open-close member (open-close means) for controlling supply of an ice confection by opening or closing an opening section that faces outside of the supplying path. Further, the ice confection producing device of the present invention includes a bypass means (ice confection circulating path) for connecting the supplying path and the cooling and stirring member. This restrains the melting of the ice confection inside the supplying path by the influence of the outside air temperature.

### [First Embodiment]

The following explanation deals with an ice confection producing device 1 in accordance with the first embodiment of the present invention with reference to Fig. 1 through Fig. 6. Fig. 1 is a partial cross-sectional view illustrating main parts of the embodiment of the present invention.

As illustrated in Fig. 1, the ice confection producing device 1 includes a front lid section (lid member) 2, a plunger (open-close means) 3, and a cooling cylinder 4. The cooling cylinder 4 has a substantially cylindrical shape and has an opening at its one end (opening section 4a). Provided inside the cooling cylinder 4 are a center bar (rotation shaft) 5, a stirring wing 6, and a blade 7.

The front lid section 2 is for sealing the opening section 4a of the cooling cylinder 4, which opening section 4a is provided on the front side of the ice confection producing device. The front lid section 2 is provided so as to be detachable to the opening section 4a of the cooling cylinder 4. Namely, the front lid section 2 is provided for releasably sealing an end surface of the cooling cylinder 4, which end surface is on the front side of the device. In the present embodiment, the front lid section 2 has a sealing wall 2a, which is a round projection, on its surface which is attached to the cooling cylinder 4, i.e., on an inner surface of the cooling cylinder 4 (hereinafter, merely referred to as the inner surface for the convenience of explanation). This causes the sealing wall 2a to fit into the opening section 4a of the cooling cylinder 4. The front lid section 2 is attached to the cooling cylinder 4, i.e., a main body of the ice confection producing device 1, by fitting the sealing wall 2a into the opening section 4a of the cooling cylinder 4. A way to attach the front lid section 2 to the opening section 4a of the cooling cylinder 4 is not limited to a specific one.

The sealing wall 2a has a recessed section 2b for the center bar, the recessed section 2b serving as a recessed section (axle bearing) into which one end of the center bar 5 inside the cooling cylinder 4 fits (concave-convex fitting). Further, the front lid section 2 includes a main path (ice confection supplying path) 2c in which an ice confection, pushed out from the cooling cylinder 4, goes through. The main path 2c is provided so as to perpendicular to the inner surface of the front lid section 2. Further, the recessed section 2b and the main path 2c are connected via a bypass (ice confection circulating path) 2d.

The main path 2c is connected to an open-close path 2f (ice confection supplying path). The main path 2c and the open-close path 2f continuously form the ice confection supplying path.

The open-close path 2f is formed so as to penetrate through the front lid section 2, and the plunger 3 is inserted into the open-close path 2f. The plunger 3 is movable inside the open-close path 2f, and controls the open-close path 2f to open or close. Namely, the plunger 3 serves as an open-close member which allows the ice confection supplying path to open or close.

When it is supposed that the main path 2c and the open-close path 2f serve as a continuous ice confection supplying path, the ice confection supplying path is connected to the ice confection extruding port (ice confection outlet) 2e at an open-close position of the plunger 3. The plunger 3 is movable inside the ice confection supplying path and the movement of the plunger 3 controls the ice confection supplying path to open or close. Specifically, it is possible to connect the main path 2c and the open-close path 2f by causing the plunger 3 to be in an open state. This causes the ice confection pushed out from the cooling cylinder 4 to be supplied outward from the ice confection extruding port 2e which is provided at one end of the open-close path 2f.

The plunger 3 is not specifically limited to the above arrangement, provided that it is arranged so as to open or close the ice confection supplying path. In the present invention, it is needless to say that the means for taking out an ice confection from the cooling cylinder 4 does not necessarily have the arrangement in which the ice confection supplying path opens or closes and therefore other arrangement than the above can be adopted.

The bypass 2d is branched from the main path 2c. Namely, one opening section of the bypass 2d is opened in the main path 2c, and the other opening section of the bypass 2d is opened on the inner surface of the front lid section 2 (the recessed section 2b of the sealing wall 2a in the present embodiment). The details of the bypass 2d are described later.

Unlike the main path 2c and the open-close path 2f serving as the ice confection supplying path, the bypass 2d is an ice confection circulating path for returning an ice confection to the cooling cylinder 4. In the present embodiment, each of the ice confection supplying path and the ice confection circulating path is formed as a hole in the front lid section 2. An actual arrangement of the present invention is not particularly limited to this example in which each of the paths is integrated in the front lid section 2. Each of the paths may be formed as a pipe that is independent from the front lid section 2. Alternatively, each of the paths can be partially integrated in the front lid section 2 and partially formed as a separate member.

The cooling cylinder 4 has a substantially cylindrical shape. The opening section 4a, which is one end (on the front side of the device) of the cooling cylinder 4, is sealed by the front lid section 2. Further, an un-illustrated cooler (cooling means and cooling section) is provided around the cooling cylinder 4. The cooler cools down inside of the cooling cylinder 4 at a predetermined temperature.

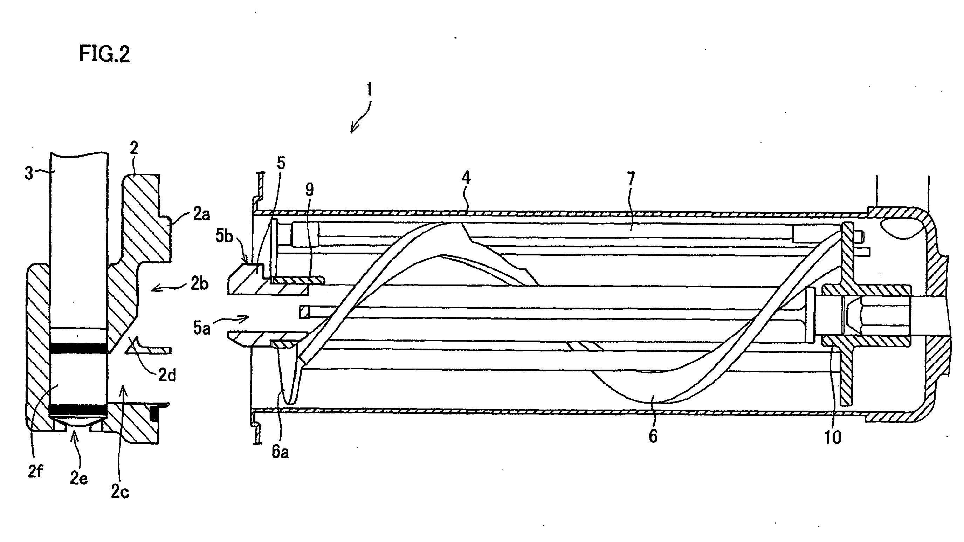

Fig. 2 is a cross-sectional view illustrating a whole arrangement of the ice confection producing device 1 as illustrated in Fig. 1. As illustrated in Fig. 2, the center bar 5, the stirring wing 6, and the blade 7 are provided inside the cooling cylinder 4 as described above. In the present embodiment, the center bar 5, the stirring wing 6, and the blade 7 serve as a stirring section (ice confection stirring means) for stirring an ice confection inside the cooling cylinder 4. More specifically, the center bar 5 serves as an attached stirring member, and the stirring wing 6 and blade 7 serve as a rotating stirring member. In other words, in the present invention, the stirring section inside the cooling cylinder 4 includes the center bar 5 serving as the attached stirring member, and the stirring wing 6 and the blade 7, serving as the rotating stirring member, each of which rotates around the center bar 5. The stirring section is provided so as to rotate around the center bar 5 serving as a rotation shaft.

The center bar 5 is attached and therefore does not rotate. The center bar 5 functions as an obstruction board in a rotation direction of the ice confection pushed out along a spiral shape of the stirring wing 6. Namely, the center bar 5 prevents or restrains the stirring wing 6 and the ice confection from rotating together, while the produced ice confection is pushed out toward the main path 2c by the stirring wing 6. In the present embodiment, the center bar 5 is attached so as to be detachable to the front lid section 2. The center bar 5 has one end, on the front lid section 2 side, which is a grip section 5b. The grip section 5b has a larger outer diameter than that of a main body of the center bar 5. The grip section 5b is supported by a convex-concavo fitting in which the grip section 5b fits into the recessed section 2b of the front lid section 2. Namely, the recessed section 2b functions as an axle bearing of the center bar 5.

An actual shape of the center bar 5 is not specifically limited, provided that it has a shape so as to function as the attached stirring member that can restrain the stirring wing 6 and the ice confection from rotating together. In the present embodiment, the center bar 5 has a cross-shape cross-section. With this arrangement, it is possible to restrain the ice confection from rotating together by four projecting boards extending toward four different directions from the center. Therefore, not only the cross-shape cross-section, but also a shape that has a cross-section such as board-like parts projecting from the center to outside is used as the center bar 5.

As illustrated in Fig. 2, the stirring wing 6 has a spiral shape. Rotation of the stirring wing 6 causes the ice confection inside the cooling cylinder 4 to be stirred and to be moved toward the opening section 4a side. The stirring wing 6 includes the blade 7. The blade 7 is for scraping hardened ice confection which is cooled down by an inner surface of the cooling cylinder 4. The blade 7 is provided so as to contact the inner surface of the cooling cylinder 4 in a longitudinal direction of the cooling cylinder 4.

When it is assumed that (i) the opening section 4a side of the cooling cylinder 4 indicates a front side of the device and (ii) the other side of the cooling cylinder 4 indicates a rear side of the device, an auger 6a (ice confection extruding means) is provided at an end of the stirring wing 6 on the front side of the device. The auger 6a is an extruding board for applying press force to an ice confection in sync with a rotation of the stirring wing 6. The auger 6a is not specifically limited in shape. Normally, the auger 6a can be one which extends throughout the cross-section of the cooling cylinder 4, and has a steep spiral shape such that the auger 6a is disproportionately provided at the end of the stirring wing 6.

Further, a first insertion port 9 is provided at the end of the stirring wing 6 on the front side of the device so as to be surrounded by the auger 6a. A second insertion port 10 is provided at an end of the stirring wing 6 on the rear side of the device. The first and second insertion ports 9 and 10 are for inserting and positioning the center bar 5.

Namely, while an ice confection is produced, the stirring wing 6 (and blade 7) rotates around the center bar 5 serving as a base axle (rotation shaft), so that the ice confection or ingredients of the ice confection are stirred. Therefore, it is necessary that the stirring wing 6 is rotatably combined with the center bar 5 and that the center bar 5 in combination with the stirring wing 6 is positioned at a rotation center. Therefore, the first insertion port 9 causes the front side of the center bar 5 to be rotatably supported and the second insertion port 10 causes the rear side of the center bar 5 to be rotatably supported. This allows the center bar 5, which is attached to the inner surface of the front lid section 2, to be positioned at a central axis inside the cooling cylinder 4, while the front lid section 2 is attached to the opening section 4a. It follows that the stirring wing 6 (and blade 7) is rotatably provided around the center bar 5.

Note that actual arrangements such as the front lid section 2, the plunger 3, the cooling cylinder 4, and the stirring wing 6 are not limited to specific ones. It is possible to suitably adopt shapes and materials which are known in the technical field belonging to the present invention.

The ice confection producing device 1 of the present embodiment includes the bypass 2d, which is a branch path of the ice confection supplying path (the main path 2c), and returns an ice confection to inside the cooling cylinder 4, while the plunger 3 is closing the main path 2c. In the present invention, the opening section (the opening section on the cylinder side) of the bypass 2d is provided such that it opens to the inside of the cooling cylinder 4 such that the press force applied to the ice confection by the stirring wing 6 (particularly by the auger 6a) is smaller than that applied to the ice confection in the main path 2c while the plunger 3 is in a closing state. The following description deals in detail with the point.

As illustrated in Fig. 1, the main path 2c extends in a direction that is along a rotation shaft of the stirring wing 6 (longitudinal direction of the center bar 5). The plunger 3, which moves in a direction orthogonal to the direction in which the main path 2c extends, allows the main path 2c to open or close. At an upstream of an area where the plunger 3 opens or closes, the bypass 2d is branched from the main path 2c, and is connected to inside the cooling cylinder 4.

A connecting opening section 2d-1 of the bypass 2d on the cylinder side is provided in the recessed section 2b for the center bar into which the grip section 5b of the center bar 5 fits. An extending bypass (extending through-hole) 5a is provided in the grip section 5b, which fits into the recessed section 2b, so as to penetrate through the grip section 5b.

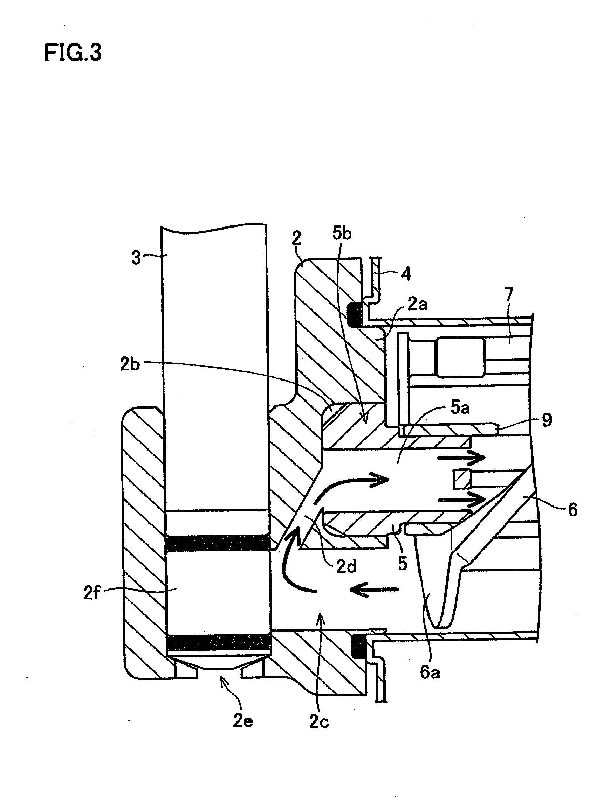

Therefore, as illustrated in Fig. 3, when the front lid section 2 seals the opening section 4a of the cooling cylinder 4, the grip section 5b fits into the recessed section 2b. This causes a connection of the bypass 2d of the front lid section 2 and the extending bypass 5a of the center bar 5. As a result, as illustrated in Fig. 3, the bypass 2d of the front lid section 2 and the extending bypass 5a of the center bar 5 form a single continuous ice confection circulating path which connects (i) a position that is in the vicinity of the plunger 3 (in the vicinity of open-close position) in the main path 2c and (ii) a position inside the cooling cylinder 4, in particular, a position that is on the further rear side of the device, as compared with the auger 6a of the stirring wing 6.

In other words, the connecting opening section 2d-1 of the bypass 2d is provided so as to match the center bar 5, i.e., the rotation shaft of the stirring wing 6. It follows that an opening section of the extending bypass (extending through-hole) 5a is formed in the grip section 5b of the center bar 5 so as to connect to the connecting opening section 2d-1. In this position, the press force applied to ice confection by the stirring wing 6 and the auger 6a is smaller than that applied to the ice confection inside the main path 2c, while the plunger 3 closes the main path 2c.

As illustrated in Fig. 1 through Fig. 3, at a front end of the cooling cylinder 4, the auger 6a functions so as to push out the ice confection toward the front side of the cooling cylinder 4. However, the auger 6a does not exist in the vicinity of the rotation shaft. As such, only press force due to the stirring caused by the stirring wing 6 is applied to the ice confection in this area. On the other hand, physically greater press force is applied to the ice confection in the main path 2c than in an area where the connecting opening section 2d-1 substantially matches the rotation shaft. This is because the auger 6a directly applies the press force to the ice confection in the main path 2c so as to push it outside of the cooling cylinder 4.

Thus, the bypass 2d is provided so as to connect (i) the main path 2c in which the press force applied to the ice confection is relatively large (strong) and (ii) the bypass 2d in which the press force applied to the ice confection is small (weak). This causes the ice confection inside the main path 2c to return to inside the cooling cylinder 4, in particular, to a further rear side of the device as compared with the auger 6a of the stirring wing 6, via the bypass 2d and the extending bypass 5a that is connected to bypass 2d, while the plunger 3 is closed (see Fig. 3). As a result, it is possible to prevent the melting of an ice confection in the main path 2c per se because the ice confection, which is starting to melt due to the influence of the outside air temperature, is collected inside the cooling cylinder 4 and is then cooled again.

Moreover, as compared to whole amount of the ice confection inside the cooling cylinder 4, an amount of the ice confection circulating inside the main path 2c and the bypass 2d is negligibly small. Therefore, continuous circulation of the ice confection hardly affects the string and cooling of the ice confection. As such, it is possible to surely and effectively avoid a situation in which the quality of ice confection declines.

When the device with the front lid section 2 is seen from the front surface side of the device to specify the connecting opening section 2d-1, it can be said that the connecting opening section 2d-1 of the bypass 2d is provided in the vicinity of the rotation shaft.

The connecting opening section 2d-1 should substantially match the rotation shaft. However, the rotation shaft, i.e., the center bar 5 has a certain diameter. Therefore, when providing the connecting opening section 2d-1 having a smaller diameter than that of the rotation shaft, it is not necessary for the connecting opening section 2d-1 to substantially match the center of the rotation shaft. Even though the connecting opening section 2d-1 does not match the rotation shaft, it is effective enough that the connecting opening section 2d-1 is positioned in the vicinity of the rotation shaft. This is because a certain margin should be secured between the auger 6a and the center bar 5.

Further, as illustrated in Fig. 1, it is preferable that the other opening section of the bypass 2d, i.e., a main path side opening section 2d-2 is provided as close to the plunger 3 as possible. In the main path 2c, the closer to the plunger 3 an ice confection is, the farther it is away from the cooling cylinder 4, so that it is more likely to be affected by outside air temperature. Further, the lower viscosity an ice confection has, the weaker press force is required to return the ice confection to the cooling cylinder 4 via the bypass 2d. Therefore, it is possible to return the ice confection in the main path 2c which has the lowest viscosity to the cooling cylinder 4 via the bypass 2d, by providing the main path side opening section 2d-2 as close to the plunger 3 as possible. This allows an ice confection inside the ice confection producing device 1 to maintain a certain viscosity.

Thus, the connecting opening section 2d-1 of the bypass 2d should be provided so as to be within an area where it matches or substantially matches the rotation shaft, i.e., the attached center bar 5. In the present embodiment, provided at the end of the center bar 5 is the extending bypass 5a in which one end is connected to the connecting opening section 2d-1 and the other end is connected to the inside of the cooling cylinder 4. This allows the ice confection which circulates to be returned to the inside of the cooling cylinder 4 from the bypass 2d of the front lid section 2, via the extending bypass 5a. There is no specific limitation as to how and where the extending bypass 5a, which is provided in the center bar 5, is shaped and provided.

For example, the grip section 5b forms an opening section, which connects to the connecting opening section 2d-1 in the extending bypass 5a (see Fig. 1 through Fig. 3). There is no specific limitation as to how the grip section 5b is shaped and how the opening section formed by the grip section 5b. In the present embodiment, the grip section 5b has a triangular shape when it is seen from the front lid section 2 side. However, the shape is not limited to this, provided that it has a shape other than a circle. In a case where the grip section 5b has a shape which has corners, an elliptical shape with a considerably high oblateness, or the like, the grip section 5b and recessed section 2b for the center bar fit together by insertion via their respective corners. As a result, the center bar is attached effectively enough against the rotation of ice confection.

Further, in a case where the grip section 5b has a shape with corners, such as an octagon, a hexagon, a square, or a triangle. The shape of the grip section 5b becomes closer to a circle as the number of corners increases. Therefore, as the shaft bearing has more corners, the shaft bearing becomes more slippery against the recessed section 2b due to the rotation of the stirring wing 6. As a result, the center bar 5 is less likely to be attached against the rotation of ice confection. Thus, it is preferable that a shape of the shaft bearing has fewer corners, and an elliptical shape or a triangular shape is particularly preferable.

Further, the extending bypass 5a of the center bar 5 can be a through-hole which penetrates through the grip section 5b. However, the extending bypass 5a should not be specifically limited to this shape and can have branches. For example, as illustrated in Fig. 3, the extending bypass 5a can become a single opening section when it connects to the connecting opening section 2d-1, whereas become a plurality of opening sections when it connects to inside the cooling cylinder 4.

In the present embodiment, the grip section 5b has an outer diameter which is larger than the main body of the center bar 5. However, the main body of the center bar 5 has a relatively small outer diameter and a cross-shape cross-section, for example as described before. As illustrated in Fig. 3, it is possible to form the extending bypass 5a at contact points between the grip section 5b and the main body of the center bar 5, by forming four opening sections (only two opening sections are illustrated in Fig. 3) between projecting boards having a cross-shape. This allows the extending bypass 5a to be formed in accordance with an actual shape of the center bar 5.

The present invention is preferably applicable to an ice confection producing device which includes a single cooling cylinder 4, and is particularly applicable to an ice confection producing device which includes a plurality of cooling cylinders 4. The device which includes a single cooling cylinder 4 is only capable of supplying a single kind of ice confection. However, the device which includes a plurality of cooling cylinders 4 is capable of not only supplying a plurality kinds of ice confections at the same time, but also supplying a mixture of different kinds of ice confections as a different type of ice confections with plurality of cooling cylinders 4.

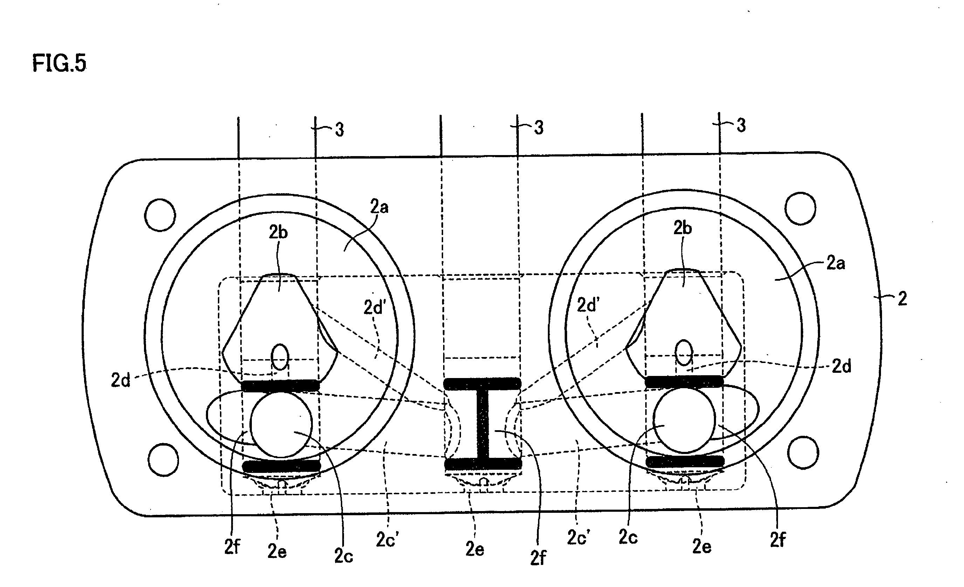

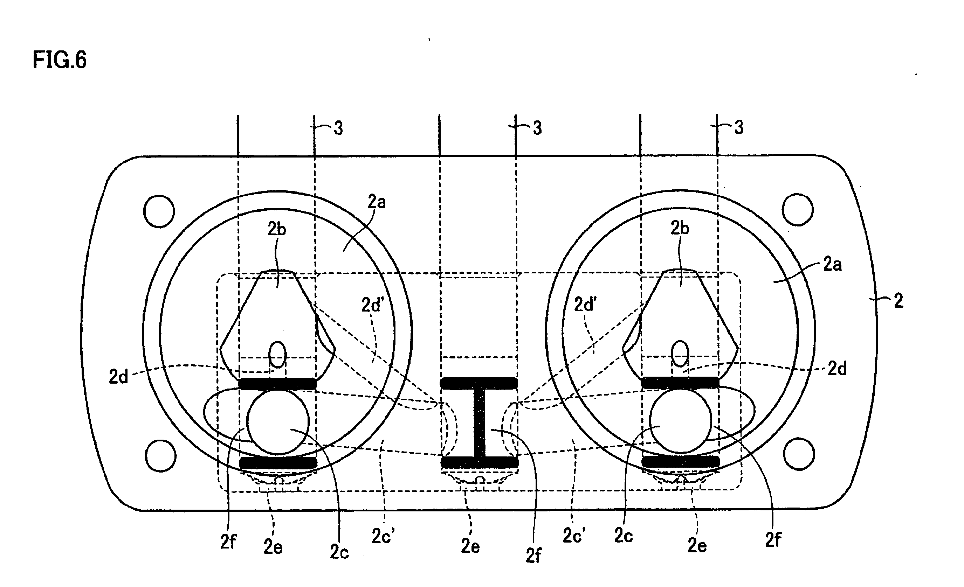

Namely, the ice confection producing device 1 of the present embodiment is a multiple-kind-supply ice confection producing device in which a plurality of cooling cylinders 4 are provided and the front lid section 2 includes a plurality of plungers 3 and ice confection extruding ports 2e. The following description deals with an example structure of the front lid section 2 in the multiple-kind-supply ice confection producing device 1, with reference to Fig. 5 and Fig. 6. Fig .5 illustrates an example of actual structure of bypasses provided in the multiple-kind-supply ice confection producing device 1. Fig 6 illustrates another example of actual structure of bypasses provided in the multiple-kind-supply ice confection producing device 1.

According to structures in Fig. 5 and Fig. 6, three ice confection extruding ports 2e are provided. Right and left ice confection extruding ports 2e are connected to cooling cylinders 4, respectively and independently. In ice confections in the cooling cylinders 4 on both sides are supplied to a center ice confection extruding port 2e, via mixing main paths 2c' which are connected to the cooling cylinders 4 on both sides, respectively. Namely, a single front lid section 2 seals end surfaces (opening section 4a on the front side of the device) of a plurality of cooling cylinders 4.

The bypasses 2d connect the cooling cylinders 4 on both sides and the main paths 2c, respectively. As described above, one opening section each of the bypasses 2d (main path side opening section 2d-2) is connected to the main path 2c, and the other opening section (connecting opening section 2d-1) of the bypass 2d is connected to the recessed section 2b for the center bar. Further, the cooling cylinders 4 on both sides and the mixing main paths 2c' are connected by mixing bypasses 2d', respectively. The mixing main paths 2c' connect a center open-close path 2f and the cooling cylinders 4, respectively. One opening sections of the mixing bypasses 2d' are provided so as to connect the center open-close path 2f and the mixing main paths 2c', and the other opening sections of the mixing bypasses 2d' are provided so as to be connected to the recessed sections 2b, respectively.

Namely, the main paths 2c are extended from the cooling cylinders 4, respectively. The mixing main paths 2c' are branch paths of the main paths 2c, the mixing main paths 2c' becoming ice confection branched paths, respectively. And, the mixing main paths 2c' are then merged. The plunger 3 and the open-close path 2f are provided in an area where the mixing main paths 2c' are merged. Further, the mixing bypass 2d' is connected to the mixing main path 2c'.

With the above mentioned arrangement, in a case where each of the three plungers 3 is in a closing state, ice confections extruded by the respective stirring wing 6 of the cooling cylinders 4 on both sides are pushed out to the recessed section 2b via the main paths 2c, the mixing main paths 2c', the bypasses 2d, and the mixing bypasses 2d' in this order. Since the center bars 5 are fitted into the recessed sections 2b (convex-concavo fitting), respectively, the ice confections thus pushed out to the recessed sections 2b return to inside the cooling cylinders 4, in particular toward the further rear side of the device as compared with the augers 6a of the stirring wing 6, via the extending bypasses 5a that are provided in the center bars 5, respectively (see Fig. 3).

As illustrated in Fig. 6, the mixing bypasses 2d' can only be connected to the mixing main paths 2c', respectively. Alternatively, as illustrated in Fig. 5, each of the mixing bypasses 2d' can be connected to both the mixing main path 2c' and the center open-close path 2f. In other words, it is possible to improve circulation efficiency of the ice confections in a case where branch points of the mixing bypasses 2d' of the mixing main paths 2c' are located before merging points of the mixing main paths 2c', respectively.

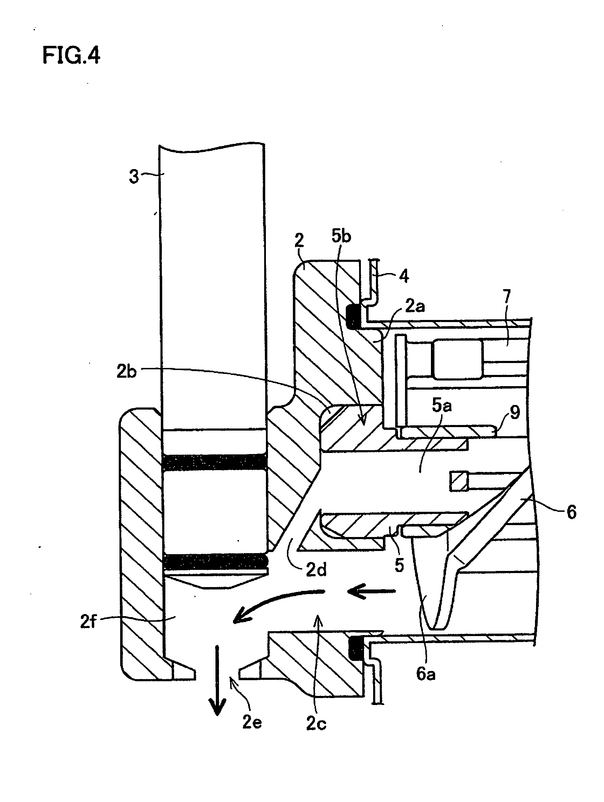

The following description deals with an example of operation of the ice confection producing device 1, i.e., a method of producing an ice confection in accordance with the present invention, with reference to Fig. 3 and Fig. 4. Fig. 3 illustrates a flow of ice confection in the ice confection producing device 1 obtained in a case where the plunger 3 is in a closing state. Fig. 4 illustrates a flow of ice confection in the ice confection producing device 1 obtained in a case where the plunger 3 is in an opening state. In the following example, a soft serve ice cream is exemplified as an ice confection to be produced.

Firstly, ingredients of a soft serve ice cream (herein after, merely referred to as ingredients) are supplied to the cooling cylinder 4 from an ice confection ingredient resource which is not illustrated. Then, a cooler provided around the cooling cylinder 4 starts a cooling operation, and the stirring wing 6 (and the blade 7) rotates around the center bar 5 serving as the rotation shaft. Accordingly, the ingredients inside the cooling cylinder 4 are stirred and cooled, thereby gradually increasing their viscosity so that a soft serve ice cream is produced.

As described above, the soft serve ice cram is produced in such a manner that the ingredients are cooled down by the cooler while they are stirred by the stirring wing 6 continuously. During this process (producing step), the ingredients basically have a liquid form. The soft serve ice cream thus produced inside the cooling cylinder 4 is pushed out, along the spiral shape of the rotating stirring wing 6, to the opening section 4a side (the front side of the device) of the cooling cylinder 4. Note that the produced soft serve cream has become semisolid because of an increase in viscosity due to cool down.

While soft serve ice cream is produced, or while produced soft serve ice cream is not extruded (holding step), the plunger 3 is in a closing state. During these periods, the soft serve ice cream extruded along the spiral shape of the stirring wing 6 is pushed out to the main path 2c by the auger 6a. At this time, as illustrated in Fig.3, the bypass 2d of the front lid section 2 and the extending bypass 5a of the center bar 5 become a single continuous ice confection circulating path, which connects (i) a position in the vicinity of the plunger 3 (in the vicinity of open-close position) in the main path 2c and (ii) a position inside the cooling cylinder 4, in particular, an area on the further rear side of the device as compared with the auger 6a of the stirring wing 6 inside the cooling cylinder 4.

In this situation, there is a difference in press force applied to the soft serve ice cream between in the vicinity of the main path side opening section 2d-2 and in the vicinity of an opening section of the extending bypass 5a inside the cooling cylinder 4. Specifically, in the vicinity of the main path side opening section 2d-2, the auger 6a continuously applies the press force to the soft serve ice cream. In the vicinity of the opening section of the extending bypass 5a inside the cooling cylinder 4, the stirring wing 6 applies, to the soft serve ice cream, stirring force and press force which is weaker than the press force applied by the auger 6a. This is because the opening section of the extending bypass 5a is located on the far side of the auger 6a inside the cooling cylinder 4 (on the further rear side of the device as compared with the auger 6a).

More specifically, the press force caused by the auger 6a always acts on the soft serve ice cream so that the soft serve ice cream is pushed out. Therefore, inside the main path 2c, the force is always applied so as to direct from cooling cylinder 4 side to the outside. On the other hand, in the vicinity of the opening section of the extending bypass 5a, the agitation force and the press force which is weaker than that of the auger 6a, is applied to the soft serve ice cream by the stirring wing 6. In the present embodiment, the agitation force and the weaker press force act on the soft serve ice cream, for example, as the force for stirring the soft serve ice cream and as the press force for pushing out the soft serve ice cream toward the front side of the device. As such, the agitation force and the weaker press force are dispersed as compared to the press force applied by the auger 6a.

When it is seen from the viewpoint of pressure of the soft serve cream, a large vector force in a specific direction is directly applied to the soft serve ice cream in the main path 2c, so that the soft serve ice cream itself has great pressure. On the other hand, inside the cooling cylinder 4, the dispersive force is applied to the soft serve ice cream, so that the soft serve ice cream itself has small pressure. When it is seen from the viewpoint of a press force applying direction (a direction in which the press force is applied) by the auger 6a, the press force applied to the soft serve ice cream inside the main path 2c is released inside the cooling cylinder 4 via the bypass 2d and the extending bypass 5a.

Therefore, soft serve ice cream inside the main path 2c is pushed back via the bypass 2d and the extending bypass 5a to inside the cooling cylinder 4 that has less pressure (weaker press pressure). Even if soft serve ice cream is melted or has low viscosity so as not to be a desired semisolid state, the soft serve ice cream is re-cooled in the cooling cylinder 4 to which the soft serve ice cream is pushed back.

As a result, it is possible to re-cool soft serve ice cream inside the cooling cylinder 4 which soft serve ice cream has started to melt in the main path 2c by influence of the outside air temperature. This allows soft serve ice cream (ice confection) to be maintained in a certain condition during the producing step or the holding step.

In this embodiment, it is preferable that soft serve ice cream is pushed out by the auger 6a of the stirring wing 6 at regular intervals in a case where the plunger 3 is in the closing state. The main path 2c is affected by the outside air temperature so that soft serve ice cream inside the main path 2c starts melting in a case where a press force is not applied to the soft serve ice cream for a long period of time. Therefore, it is very preferable to set such that soft serve ice cream inside the main path 2c is pushed out at regular intervals while the plunger 3 is in the closing state. As described above, during the holding step, soft serve ice cream is stirred by the stirring wing 6 at regular intervals and is cooled down by the cooler so that the soft serve ice cream is maintained in a certain condition.

Further, during the closing state of the plunger 3, i.e., ready and waiting for sales of the soft serve ice cream, even though the auger 6a of the stirring wing 6 circulates the soft serve ice cream at regular intervals, melted soft serve ice cream is supplied if the soft serve ice cream is sold before the next circulation. Therefore, it is preferable that the ice confection producing device 1 include operation initiating means. The operation initiating means forcibly initiates the operations of the auger 6a and the stirring wing 6 before opening up the plunger 3 in order to sell the soft serve ice cream (in order to open the plunger 3).

The operation initiating means allows the auger 6a of the stirring wing 6 to operate so as to circulate soft serve ice cream to inside the cooling cylinder 4, even if the soft serve ice cream has started to melt at a point of sales. It may be arranged such that once the operation initiating means has started its operation, the stirring wing 6 and the auger 6a continue the extruding operation for a predetermined period of time (about ten seconds), or the stirring wing 6 and the auger 6a continue the extruding operation while an operator manually operates. In the present invention, the operation initiating means may preferably adopt a structure disclosed in Japanese Unexamined Patent Publication, Tokukaihei, 7-087898, for example.

Next, when produced soft serve ice cream is to be extruded, the plunger 3 is put in the opening state. At this time, as illustrated in Fig. 4, the plunger 3 moves up from a lower position to an upper position (see Fig. 3) so that the main path 2c and the open-close path 2f are connected. This allows the soft serve ice cream to be supplied from the ice confection extruding port 2e, which is provided one end of the open-close path 2f, to the outside via the main path 2c and the open-close path 2f.

After stopping a production and storage of soft serve ice cream, the ice confection producing device 1 proceeds sterilization. A cooling circuit for controlling the cooler is reversely operated so that hot gas circulates outer wall of the cooling cylinder 4. This allows soft serve ice cream to be heated up to a sterilization temperature provided under the law. At the same time, parts other than the cooling cylinder 4 which parts contact soft serve ice cream, such as the main path 2c, the bypass 2d, the open-close path 2f, and the like are also sterilized.

In a conventional and general structure, a temperature around the plunger 3 in the front lid section 2 is hard to increase. In the present invention, it is possible to effectively increase a temperature of the entire front lid section 2, particularly around the plunger 3 because the front lid section 2 includes the main path 2c, the open-close path 2f, as well as the bypass 2d. As a result, the ice confection producing device of the present invention is quite effective not only in the production of ice confection but also in the sterilization after the production.

For cleaning, the front lid section 2 is detached. In the ice confection producing device 1, the center bar 5 and the front lid section 2 are detachable. Therefore, the front lid section 2, center bar 5, and stirring wing 6 (and the blade 7) are detachable independently for cleaning. Similarly, when mounting the stirring wing 6 and front lid section 2 to the cooling cylinder 4 after cleaning, the following procedure is possible. The center bar 5 is attached to the stirring wing 6 by inserting the center bar 5 into the first insertion port 9 and second insertion port 10. After the blade 7 is then attached to the stirring wing 6, the stirring wing 6 with the blade 7 is mounted inside the cooling cylinder 4 and the front lid section 2 is attached to the cooling cylinder 4. This allows the front lid section 2 and the ice confection extruding section to be easily detachable.

As described above, a method for producing ice confection according to the present invention includes: a producing step of the ice confection by continuously stirring and cooling ingredients of the ice confection inside the cooling cylinder while the ice confection supplying path (main path 2c) is in a closing state; a holding step of the ice confection by periodically stirring and cooling the ice confection inside the cooling cylinder while the ice confection supplying path (main path 2c) is in the closing state; an extruding step of the ice confection by pushing out the ice confection from the ice confection supplying path while the ice confection supplying path (main path 2c) is in an opening state, the ice confection being extruded while the ice confection is stirred inside the cooling cylinder; and a circulating step of the ice confection by circulating the ice confection in the ice confection supplying path (main path 2c) to the cooling cylinder during the producing step and the holding step, the circulating step circulating the ice confection so as to re-cool, inside the cooling cylinder, the ice confection that has started to melt in the ice confection supplying path (main path 2c) by influence of an outside air temperature.

As described above, in an initial stage of the producing step, ingredients of ice confection are basically in a liquid form. The ice confection is becoming semisolid as progressing the production process. During the extruding step and the holding step, the ice confection is semisolid. In the present invention, for example, even if semisolid ice confection has become liquid in the ice confection supplying path during the holding step, the circulation step allows the melted ice confection to circulate to an area in which the melted ice confection is re-cooled.

Classification of the steps, such as the producing step, the holding step, the extruding step, and the circulating step, is made so as to clarify effect, function, and characteristic of the present invention in a production method. Needless to say that it is not classified in chronological order of the production process. As is clear from the description on the operation (ice confection production process) of the ice confection producing device 1, the circulating step can be performed during the producing step or the holding step. Further, as long as production and sales of ice confection carry on (the period from ceasing production and storage to sterilization), ingredients are supplied and ice confection is produced continuously so as to replenish an amount of sold or decreased. Accordingly, the producing step is performed not only at the beginning of the production and distribution, but also performed in the holding step as required.

As described before, the ice confection producing device 1 of the present embodiment is capable of returning ice confection in the main path 2c, which is affected by the outside air temperature, to inside the cooling cylinder 4 in which the ice confection can be re-cooled. This prevents or restrains ice confection in the main path 2c from melting. As a result, it is possible to prevent melted ice confection in the main path 2c from scattering from an opening section that opens outside. Moreover, it is not necessary to discard melted ice confection, thereby resulting in reduction of the waste of ingredients. Specifically, the present invention is preferably applicable to a multiple-kind-supply ice confection producing device that includes a plurality of cooling cylinders 4.

### [Second Embodiment not part of the present invention]

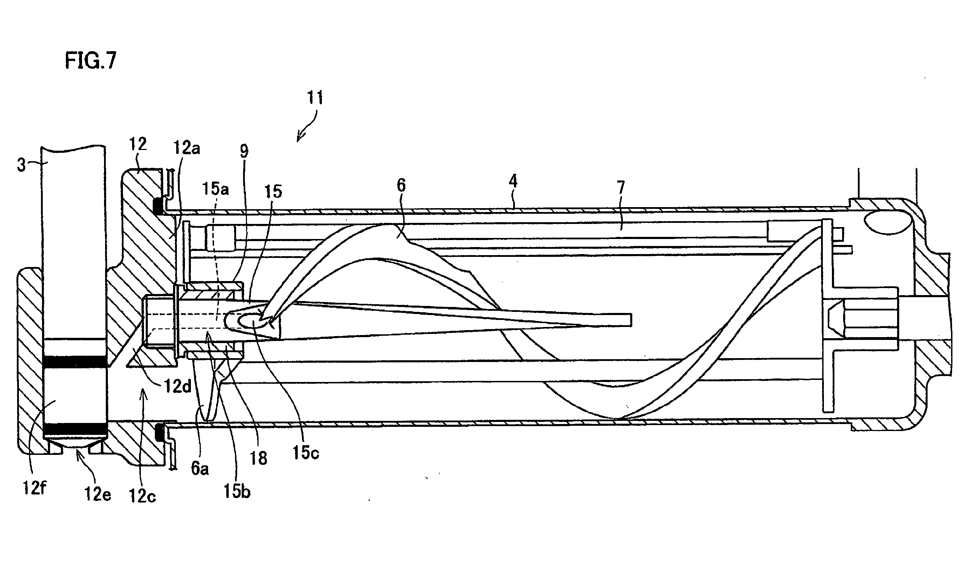

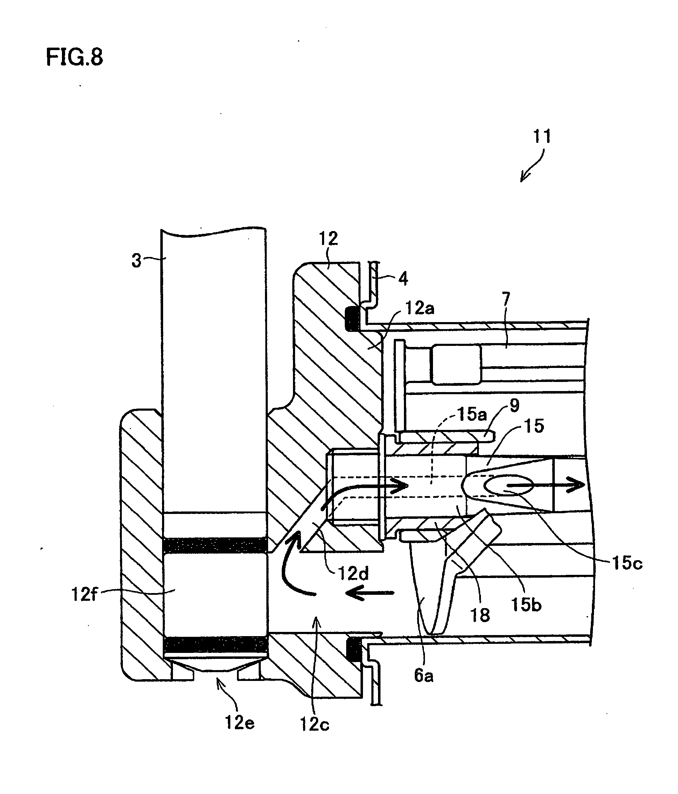

The following description deals with an ice confection producing device 11 in accordance with a second embodiment with reference to Fig. 7 and Fig. 8. Members that have functions equivalent to the corresponding members in the ice confection producing device 1 of the first embodiment are labeled in the same manner and their explanation is omitted herein.

Fig. 7 is a cross-sectional view illustrating an ice confection producing device 11 in accordance with the second embodiment **not part** of the present invention. Fig. 7 is an exploded view in order to clarify a structure of each section. Fig. 8 is a partial cross-sectional view illustrating a flow of ice confection in the ice confection producing device 11 while the plunger 3 is in a closing state.

As illustrated in Fig. 7 and Fig. 8, the ice confection producing device 11 of the present embodiment basically has the same structure as the ice confection producing device 1 except the lid member and the attached stirring member. As for the lid member and the attached stirring member, a front lid section 12 and a center bar 15 are provided, which are respectively different from the front lid section 2 and the center bar 5 in the first embodiment.

In the present embodiment, as illustrated in Fig. 7, on an inner surface of the front lid section 12, the center bar 15 is attached at the center of a sealing wall 12a so as to be substantially perpendicular to the sealing wall 12a. The sealing wall 12a is a round projection that fits an opening section of the cooling cylinder 4.

The center bar 15 is attached to a shank 15b of the front lid section 12, the shank 15b having substantially the same diameter as a width of a flat plate. By this, the center bar 15 is attached stably. The center bar 15 includes an extending bypass 15a (extending through-hole) inside the shank 15b.

A main path 12c, a bypass 12d, and an open-close path 12f are identical in shape to those in the first embodiment. However, the bypass 12d is directly connected to the extending bypass 15a of the center bar 15 continuously. Since the center bar 15 is undetachably attached to the front lid section 12, the bypass 12d that is formed in the front lid section 12, and the extending bypass 15a that is formed in the center bar are continuously connected so as to form an integrated ice confection circulating path. Therefore, practically, an opening section 15c is equal to a cylinder side opening section of the bypass 12d.

The following description deals with an operation of the ice confection producing device 11, i.e., one example of a production method of ice confection , with reference to Fig. 8. In this example, a soft serve ice cream is exemplified as an ice confection to be produced.

First, ingredients of a soft serve ice cream are supplied to the cooling cylinder 4 from an un-illustrated ice confection ingredient resource. Then, a cooler provided around the cooling cylinder 4 starts a cooling operation and the stirring wing 6 (and the blade 7) rotates around the center bar 15 serving as a rotation shaft. Accordingly, the supplied ingredients inside the cooling cylinder 4 are stirred and cooled, thereby gradually increasing their viscosity so that a soft serve ice cream is produced. Then, the soft serve ice cream thus produced is pushed out toward an opening section (the front side of the device) of the cooling cylinder 4, along a spiral shape of the stirring wing 6 that rotates.

During a producing step or a holding step of the soft serve ice cream, a plunger 3 is in a closing state. While the plunger 3 is in a closing state, the soft serve ice cream pushed along the spiral shape of the stirring wing 6 is pushed out to the main path 12c by the auger 6a. As illustrated in Fig. 8, the bypass 12d of the front lid section 12 and the extending bypass 15a of the center bar 15 form a single continuous ice confection circulating path which connects (i) a position that is in the vicinity of the plunger 3 (in the vicinity of open-close position) in the main path 12c and (ii) a position inside the cooling cylinder 4, in particular, a position that is on the rear side of the device, as compared with the auger 6a of the stirring wing 6.

In this situation, there is a difference in press force applied to the soft serve ice cream between in the vicinity of the main path side opening section (branch point) of the bypass 12d and in the vicinity of the opening section 15c of the shank 15b inside the cooling cylinder 4. Specifically, in the vicinity of a branch point, the auger 6a continuously applies a press force to the soft serve ice cream. At the rear side of the auger 6a inside the cooling cylinder 4 (the rear side of the device), however, only a stirring force caused by the stirring wing 6 is applied. Therefore, the soft serve ice cream in the main path 12c is pushed back to, via the bypass 12d and the extending bypass 15a, inside the cooling cylinder 4 in which the press force is small. Even if the soft serve ice cream is melted or has low viscosity so as not to be a desired semisolid state, the soft serve ice cream is pushed back to the cooling cylinder 4 in which the soft serve ice cream is re-cooled.

As a result, the soft serve ice cream which has started to melt inside the main path 12c by influence of the outside air temperature can be re-cooled in the cooling cylinder 4. This allows the soft serve ice cream (ice confection) to be maintained in a certain condition during the producing step and the holding step.

As described above, the ice confection producing device 11 and the ice confection producing device 1 of the first embodiment is different in that the center bar 15 is undetachable. However, the ice confection producing device 11 can achieve an equivalent effect to the ice confection producing device 1. It is needless to say that the present embodiment **not part of the invention** is also preferably applicable to a multiple-kind-supply ice confection producing device which has a plurality of cooling cylinders 4 (see Fig. 5 and Fig. 6).

In the present embodiment, the ice confection circulating path is formed by connecting the bypass 12d and the extending bypass 15a. However, the present invention is not limited to such a structure of the ice confection circulating path. In a case where the center bar 15 is attached at the front lid section 12 like the present embodiment, one continuing bypass, which is originally formed continuous, may be formed. As for the ice confection circulating path, whether connecting a plurality of bypasses or forming a single originally-continuing bypass is selected depending on a shape and a type of the front lid section 12, as well as a type and a characteristic of ice confection to be made.

### [Third Embodiment not part of the invention]

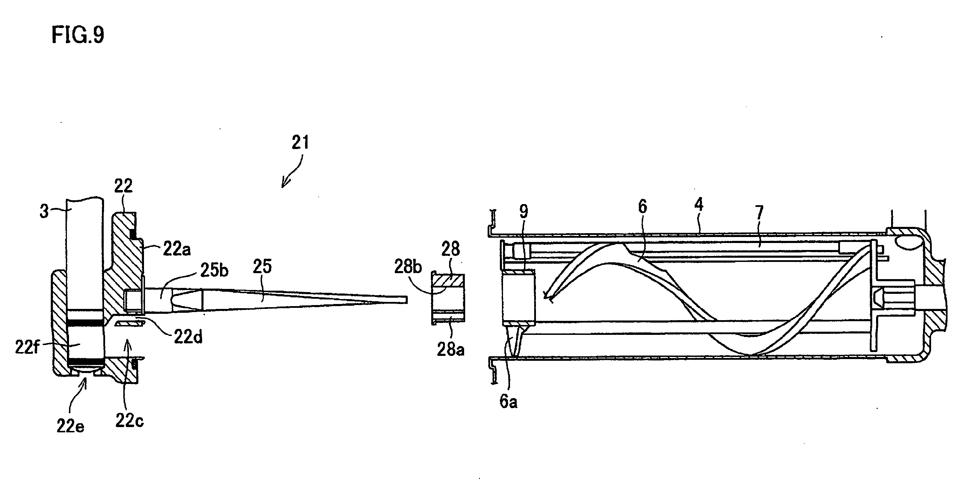

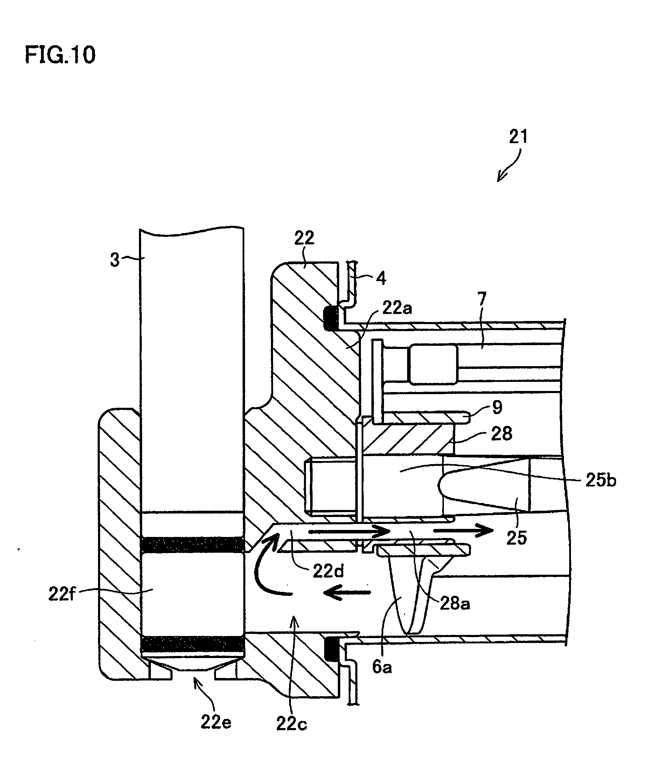

The following description deals with an ice confection producing device 21 with reference to Fig. 9 and Fig. 10. Members that have functions equivalent to the corresponding members in the ice confection producing device 1 of the first embodiment or in the ice confection producing device 11 of the second embodiment are labeled in the same manner and their explanation is omitted herein.

Fig. 9 is a cross-sectional view illustrating an overview structure of an ice confection producing device 21 in accordance with the third embodiment **not part** of the present invention. Fig. 9 is an exploded view for easy understanding of the sections in terms of their structures. Fig. 10 is a partial cross-sectional view illustrating a flow of ice confection in the ice confection producing device 21 while the plunger 3 is in a closing state.

As illustrated in Fig. 9 and Fig. 10, the ice confection producing device 21 basically has the same structure as the ice confection producing device 1 of the first embodiment except the lid member and the attached stirring member. As for the lid member and the attached stirring member, a front lid section 22 and a center bar 25 are used, which are respectively different from the front lid section 2 and the center bar 5 in the first embodiment.

As illustrated in Fig. 9, the present embodiment and the ice confection producing device 11 of the second embodiment are the same in that (i) the center bar 25 is attached on an internal surface of the front lid section 22 substantially perpendicular to a sealing wall 22a, and (ii) an attached position of the center bar 15 to the front lid section 22 is a shank 25b that has substantially the same diameter as a width of a flat plate. Differences between the present embodiment and the second embodiment are a shape of a bypass 22d of a front lid section 22 and a structure of a bushing 28 that is inserted to the shank 25b of the center bar 25.

As illustrated in Fig. 9 and Fig. 10, the bushing 28 includes an extending bypass 28a (extending through-hole) that is formed along an inserting hole 28b (see Fig. 9) for inserting the shank 25b. The extending bypass 28a is connected to the bypass 22d provided in the front lid section 22. Namely, same as the first embodiment, a front lid section 22 side opening section of the extending bypass 28a is connected to a cylinder side connecting opening section of the bypass 22d in a case where the center bar 25 is attached to the front lid section 22b by inserting the shank 25b into the bushing 28. As a result, the bypass 22d and the extending bypass 28a continuously form one integrated ice confection circulating path.

As described above, even though the cylinder side opening section is not provided within a range corresponding to an attached area of the center bar 25 in the front lid section 22, only a press force caused by stirring performed by the stirring wing 6 works on the ice confection in the bypass 22d. Therefore, the press force applied to the ice confection in the bypass 22d is weaker than a press force applied to ice confection inside the main path 22c so that the ice confection circulating path works effectively enough. A structure of the bypass 22d is not limited to this.

The following description deals with an operation of the ice confection producing device 21, or a method of producing ice confection with reference to Fig. 10. In this example, a soft serve ice cream is exemplified as an ice confection to be produced.

Firstly, ingredients of the soft serve ice cream are supplied to the cooling cylinder 4 from an un-illustrated ice confection ingredient resource. Then, a cooler provided around the cooling cylinder 4 starts a cooling operation and the stirring wing 6 (and the blade 7) rotates around the center bar 25 serving as the rotation shaft. Accordingly, the supplied ingredients inside the cooling cylinder 4 are stirred and cooled, thereby gradually increasing its viscosity so that a soft serve ice cream is produced. Then, the soft serve ice cream thus produced is pushed out toward an opening section (front side of the device) of the cooling cylinder 4 along a spiral shape of the rotating stirring wing 6.

During a producing step or a holding step of the soft serve ice cream, a plunger 3 is in a closing state. While the plunger 3 is in the closing state, the soft serve ice cream pushed along the spiral shape of the stirring wing 6 is pushed out to the main path 22c by the auger 6a. As illustrated in Fig. 10, the bypass 22d of the front lid section 22 and the extending bypass 28a of the bushing 28 become one continuous ice confection circulating path which connects between (i) a position in the vicinity of the plunger 3 (in the vicinity of an open-close position) in the main path 22c and (ii) a position inside the cooling cylinder 4, in particular, a position that is on the rear side of the device, as compared with the auger 6a of the stirring wing 6.

In this situation, there is a difference in press force applied to the soft serve ice cream between in the vicinity of the main path side opening section (branch point) of the bypass 22d and in the vicinity of an opening section of the bushing 28 inside the cooling cylinder 4. Specifically, in the vicinity of a branch point, the auger 6a continuously applies a press force to the soft serve ice cream. At the rear side of the auger 6a inside the cooling cylinder 4 (rear side of the device), however, only a stirring force caused by the stirring wing 6 is applied. Therefore, the soft serve ice cream in the main path 22c is pushed back to inside the cooling cylinder 4 that has less suppress strength via the bypass 22d and the extending bypass 28a. Even if the soft serve ice cream is melted or has low viscosity so as not to be a desired semisolid state, the soft serve ice cream is pushed back to the cooling cylinder 4 in which the soft serve ice cream is re-cooled.

As a result, it is possible to re-cool soft serve ice cream inside the cooling cylinder 4 which soft serve ice cream has started to melt by influence of the outside temperature. This allows soft serve ice cream (ice confection) in the producing step or in the holding step to be maintained in a certain condition.

In the present invention, as is clearly understood from the structure illustrated in Fig. 10, the bushing 28 is one component for attaching the center bar 25 to the front lid section 22. Therefore, it is needless to say that the bushing 28 is included as a part of (i) "ice confection extruding section", (ii) "attached stirring member" included in the ice confection extruding section, or (iii) "rotation shaft" in the present invention.

As described above, the ice confection producing device 21 is different from the ice confection producing device 1 of the first embodiment or the ice confection producing device 11 embodiment **not part of the invention**, in terms of where the cylinder side opening section is formed. However, the present embodiment **not part of the invention** can make the same effect as the first **embodiment** and second embodiment **not part of the invention.** It is needless to say that the present embodiment **not part of the invention** is also preferably applicable to a multiple-kind-supply ice confection producing device which has a plurality of cooling cylinders 4 (see Fig. 5 and Fig. 6).

The present invention is not limited to the description of the embodiment above, but may be altered by a skilled person within the scope of the claims. Namely, the present invention is not specifically limited to the embodiments 1 as long as the relationship between an auger and a bypass is implemented.

In the ice confection producing device, it is preferable that the ice confection extruding means is provided inside the cooling cylinder so as to be rotatable around a rotation shaft extending in a longitudinal direction of the cooling cylinder, and the cylinder side opening section of the ice confection circulating path is provided in the vicinity of the rotation shaft when it is seen from a front side of the ice confection producing device.

Further, it is preferable that the ice confection producing device includes a lid member for sealing a front end surface of the cooling cylinder, and being openable; and at least part of the ice confection supplying path or the ice confection circulating path is integrated in the lid member.

In this case, it is preferable that the open-close means is provided at an opening section of the ice confection supplying path, which opening section opens to outside, and at an upstream of an open-close position of the open-close means, the ice confection circulating path is branched from the ice confection supplying path and is connected to inside the cooling cylinder.

Further, it is preferable that the ice confection producing device includes a plurality of the cooling cylinders, wherein the lid member is provided for sealing each end surface of the plurality of the cooling cylinders by itself, and being openable; at least two ice confection branched paths are provided, which are branched respectively from at least two of a plurality of the ice confection supplying paths respectively extending from the plurality of cooling cylinders, and are merged each other at a merging point; an independent open-close means and an ice confection extruding port are provided at the merging point; and the ice confection circulating paths are branched respectively from the ice confection branched paths at an upstream of the merging point.

Further, in the ice confection producing device, it is preferable that the rotation shaft has a front end attached at and supported by the lid member; the ice confection circulating path has a connecting opening section opened on the lid member toward the cooling cylinder; the connecting opening section is formed in a range corresponding to an attaching area of the rotation shaft in the lid member; the front end of the rotation shaft has an extending through hole so that one end of the extending through hole connects to the connecting opening section and the other end connects to inside the cooling cylinder; and the ice confection inside the ice confection circulating path in the lid member is returned to inside the cooling cylinder via the extending through hole.

In addition to the ice confection producing device, the present invention may include an ice confection producing method including the following steps. Namely, a method for producing ice confection according to the present invention is a method for producing ice confection by using a cooling cylinder which connects to an ice confection supplying path that is openable and closable, including: a producing step of the ice confection by continuously stirring and cooling ingredients of the ice confection inside the cooling cylinder while the ice confection supplying path is in a closing state; a holding step of the ice confection by periodically stirring and cooling the ice confection inside the cooling cylinder while the ice confection supplying path is in the closing state; an extruding step of the ice confection by pushing out the ice confection from the ice confection supplying path while the ice confection supplying path is in an opening state, the ice confection being extruded while the ice confection is stirred inside the cooling cylinder; and a circulating step of the ice confection by circulating the ice confection in the ice confection supplying path to the cooling cylinder, during the producing step and the holding step; the circulating step circulating the ice confection so as to re-cool, inside the cooling cylinder, the ice confection that has started to melt in the ice confection supplying path by influence of an outside air temperature. In the method for producing ice confection, it is preferable that the ice confection is a soft serve ice cream.

### INDUSTRIAL APPLICABILITY

The present invention is preferably applicable not only to a field of an ice confection producing device for producing semisolid ice confections such as a soft serve ice cream, a shake, and the like, but also to a filed of manufacturing ice confection producing device such as a part manufacturing. Furthermore, the present invention is widely applicable to a filed of ice confection producing method.

## Claims

1. An ice confection producing device (1) comprising:
a cooling cylinder (4) for storing ice confection;
ice confection extruding means (6, 6a) for pushing out the ice confection in the cooling cylinder (4) by applying a press force on the ice confection;
an ice confection supplying path (2c) for supplying the pushed out ice confection outward;
open-close means (3) for opening or closing the ice confection supplying path (2c); and
an ice confection circulating path (2d), which is branched from the ice confection supplying path (2c) at an upstream of an open-close position of the open-close means (3) and is connected to inside the cooling cylinder, for returning the ice confection to inside the cooling cylinder (4) when the ice confection supplying path (2c) is closed by the open-close means (3),
the open-close means **(3)** being provided at an opening section of the ice confection supplying path **(2c)**, which opening section opens to outside,
the ice confection extruding means including:
a stirring wing (6) provided in a spiral shape around a rotation shaft (5) extending in a longitudinal direction of the cooling cylinder (4); and
an auger (6a) provided at a front end of the stirring wing (6),
the ice confection circulating path (2d) including a bypass (2d) and an extending bypass (5a),
the ice confection circulating path (2d) connecting a position in the vicinity of the open-close means (3) for the ice confection supplying path (2c) to a position on a further rear side as compared with the auger (6a) for the stirring wing (6) inside the cooling cylinder (4) with respect to the ice confection producing device,
a first insertion port (9) being provided at the end of the stirring wing (6) on the front side of the device so as to be surrounded by the auger (6a), a second insertion port (10) being provided, at an end of the stirring wing (6) on the rear side of the device, the first insertion port (9) and the second insertion port (10) being for inserting and positioning the rotation shaft (5), and
the rotation shaft (5) having a cross-section in which board-like parts project from the center to outside.

2. The ice confection producing device (1) according to Claim 1, further comprising:
a lid member (2) for sealing a front end surface of the cooling cylinder (4), and being openable; and
at least part of the ice confection supplying path (2c) or the ice confection circulating path (2d) being integrated in the lid member (2).

3. The ice confection producing device (1) according to Claim 2, wherein:
a plurality of the cooling cylinders (4) are provided;
the lid member (2) is provided for sealing each end surface of the plurality of the cooling cylinders (4) by itself, and being openable;
at least two ice confection branched paths (2c') are provided, which are branched respectively from at least two of a plurality of the ice confection supplying paths (2c) respectively extending from the plurality of cooling cylinders (4), and are merged each other at a merging point;
an independent open-close means (3) and an ice confection extruding port are provided at the merging point; and
the ice confection circulating paths (2d) are branched respectively from the ice confection branched paths (2c') at an upstream of the merging point.

4. The ice confection producing device (1) according to Claim 2 or 3, wherein:
the rotation shaft (5) has a front end attached at and supported by the lid member (2);
the ice confection circulating path (2d) has a connecting opening section opened on the lid member (2) toward the cooling cylinder (4);
the connecting opening section is formed in a range corresponding to an attaching area of the rotation shaft (5) in the lid member (2);
the extending bypass is formed on the front end of the rotation shaft (5); and
the ice confection inside the ice confection circulating path (2d) in the lid member (2) is returned to inside the cooling cylinder (4) via the extending bypass.

5. A method for producing ice confection with use of an ice confection producing device (1) for pushing out ice confection inside a cooling cylinder (4) by ice confection extruding means to an ice confection supplying path (2c) that is openable and closable,
the ice confection extruding means including:
a stirring wing (6) provided in a spiral shape around a rotation shaft (5) extending in a longitudinal direction of the cooling cylinder (4); and
an auger (6a) provided at a front end of the stirring wing (6),
the method comprising:
a producing step of the ice confection by continuously stirring and cooling ingredients of the ice confection inside the cooling cylinder (4) while the ice confection supplying path (2c) is in a closing state, the stirring being carried out by the stirring wing (6);
a holding step of the ice confection by periodically stirring and cooling the ice confection inside the cooling cylinder (4) by the stirring wing (6) while the ice confection supplying path (2c) is in the closing state;
an extruding step of the ice confection by pushing out the ice confection from the ice confection supplying path (2c) while the ice confection supplying path (2c) is in an opening state, the ice confection being extruded while the ice confection is stirred inside the cooling cylinder (4) by rotating the stirring wing (6); and
a circulating step of the ice confection by circulating the ice confection in the ice confection supplying path (2c) via an ice confection circulating path (2d) to the cooling cylinder (4), during the producing step and the holding step, the ice confection circulating path (2d) being branched from the ice confection supplying path (2c) at an upstream of an open-close position and is connected to inside the cooling cylinder,
the open-close means being provided at an opening section of the ice confection supplying path **(2c)**, which opening section opens to outside,
the circulating step circulating the ice confection so as to re-cool, inside the cooling cylinder (4), the ice confection that has started to melt in the ice confection supplying path (2c) by influence of an outside air temperature,
ice confection circulating path (2d) including a bypass (2d) and an extending bypass (5a),
the ice confection circulating path (2d) connecting a position in the vicinity of the open-close means (3) for the ice confection supplying path (2c) to a position on a further rear side as compared with the auger (6a) for the stirring wing (6) inside the cooling cylinder (4) with respect to the ice confection producing device,
a first insertion port (9) being provided, at the end of the stirring wing (6) on the front side of the device so as to be surrounded by the auger (6a), a second insertion port (10) being provided, at an end of the stirring wing (6) on the rear side of the device, the first insertion port (9) and the second insertion port (10) being for inserting and positioning the rotation shaft (5),
the rotation shaft (5) having a cross-section in which board-like parts project from the center to outside.

6. The method for producing ice confection according to Claim 5, wherein:
the ice confection is a soft serve ice cream.

## Patentansprüche

1. Vorrichtung für die Herstellung von Eiskonfekt (1), umfassend:
einen Kühlzylinder (4) zum Lagern von Eiskonfekt;
Eiskonfekt-Extrudiermittel (6, 6a) zum Herauspressen des Eiskonfekts in dem Kühlzylinders (4) durch Anlegen einer Druckkraft an das Eiskonfekt;
einen Eiskonfekt-Zuführweg (2c) zum Führen des herausgepressten Eiskonfekts nach außen;
Öffnungs- bzw. Schließmittel (3) zum Öffnen oder Schließen des Eiskonfekt-Zuführweges (2c); und
einen Eiskonfekt-Zirkulationsweg (2d), der von dem Eiskonfekt-Zuführweg (2c) stromaufwärts einer Öffnungs- bzw. Schließposition der Öffnungs- bzw. Schließmittel (3) abzweigt und mit dem Inneren des Kühlzylinders verbunden ist, um das Eiskonfekt in das Innere des Kühlzylinders (4) zurückzuführen, wenn der Eiskonfekt-Zuführweg (2c) von den Öffnungs- bzw. Schließmitteln (3) geschlossen wird,
wobei die Öffnungs- bzw. Schließmittel (3) an einem Öffnungsabschnitt des Eiskonfekt-Zuführwegs (2c) bereitgestellt sind, wobei sich der Öffnungsabschnitt nach außen öffnet,
wobei die Eiskonfekt-Extrudiermittel Folgendes aufweisen:
einen Rührflügel (6), der in einer Spiralform um eine Drehwelle (5) bereitgestellt ist, die sich in einer Längsrichtung des Kühlzylinders (4) erstreckt; und
eine Schnecke (6a), die an einem vorderen Ende des Rührflügels (6) bereitgestellt ist, wobei der Eiskonfekt-Zirkulationsweg (2d) eine Umgehung (2d) und eine weiterführende Umgehung (5a) aufweist,
wobei der Eiskonfekt-Zirkulationsweg (2d) eine Position in der Nähe der Öffnungs- bzw. Schließmittel (3) für den Eiskonfekt-Zuführweg (2c) mit einer Position auf einer im Vergleich zu der Schnecke (6a) für den Rührflügel (6) im Inneren des Kühlzylinders (4) in Bezug auf die Vorrichtung für die Herstellung von Eiskonfekt weiter hinten liegenden Seite verbindet,
wobei eine erste Einführöffnung (9) an dem Ende des Rührflügels (6) auf der Vorderseite der Vorrichtung derart bereitgestellt ist, dass sie von der Schnecke (6a) umschlossen wird, eine zweite Einführöffnung (10) an einem Ende des Rührflügels (6) auf der hinteren Seite der Vorrichtung bereitgestellt ist, wobei die erste Einführöffnung (9) und die zweite Einführöffnung (10) zum Einführen und Anordnen der Drehwelle (5) dienen, und
wobei die Drehwelle (5) einen Querschnitt aufweist, in dem plattenähnliche Teile aus der Mitte nach außen hervorstehen.

2. Vorrichtung (1) für die Herstellung von Eiskonfekt nach Anspruch 1, ferner umfassend:
ein Deckelelement (2), das geöffnet werden kann, zum Verschließen einer vorderen Endoberfläche des Kühlzylinders (4); und
wobei mindestens ein Teil des Eiskonfekt-Zuführwegs (2c) oder des Eiskonfekt-Zirkulationswegs (2d) in dem Deckelement (2) integriert ist.

3. Vorrichtung (1) für die Herstellung von Eiskonfekt nach Anspruch 2, wobei:
mehrere der Kühlzylinder (4) bereitgestellt sind;
das Deckelelement (2), das geöffnet werden kann, zum Verschließen jeder Endoberfläche der mehreren Kühlzylinders (4) um sich selbst bereitgestellt ist;
mindestens zwei Eiskonfekt-Abzweigwege (2c') bereitgestellt sind, die jeweils von mindestens zwei von mehreren der Eiskonfekt-Zuführwege (2c) abzweigen, die sich jeweils von den mehreren Kühlzylindern (4) erstrecken, und miteinander an einem Zusammenlaufpunkt zusammenlaufen;
ein unabhängiges Öffnungs- bzw. Schließmittel (3) und eine Eiskonfekt-Extrudieröffnung an dem Zusammenlaufpunkt bereitgestellt sind, und
die Eiskonfekt-Zirkulationswege (2d) stromaufwärts von dem Zusammenlaufpunkt von den jeweiligen Eiskonfekt-Abzweigwegen (2c') abzweigen.

4. Vorrichtung (1) für die Herstellung von Eiskonfekt nach Anspruch 2 oder 3, wobei:
die Drehwelle (5) ein vorderes Ende aufweist, das an dem Deckelelement (2) befestigt ist und von diesem gestützt wird;
der Eiskonfekt-Zirkulationsweg (2d) einen verbindenden Öffnungsabschnitt aufweist, der an dem Deckelelement (2) zu dem Kühlzylinder (4) geöffnet ist;
der verbindende Öffnungsabschnitt in einem Bereich ausgebildet ist, der einem Befestigungsfläche der Drehwelle (5) in dem Deckelelement (2) ausgebildet ist;
die weiterführende Umgehung an dem vorderen Ende der Drehwelle (5) ausgebildet ist; und
das Eiskonfekt im Inneren des Eiskonfekt-Zirkulationswegs (2d) in dem Deckelelement (2) durch die weiterführende Umgehung in das Innere des Kühlzylinders (4) zurückgeführt wird.

5. Verfahren zur Herstellung von Eiskonfekt unter Verwendung einer Vorrichtung (1) für die Herstellung von Eiskonfekt zum Herauspressen von Eiskonfekt im Inneren eines Kühlzylinders (4) durch Eiskonfekt-Extrudiermittel zu einem Eiskonfekt-Zuführweg (2c), der geöffnet und geschlossen werden kann, wobei die Eiskonfekt-Extrudiermittel Folgendes aufweisen:
einen Rührflügel (6), der in einer Spiralform um eine Drehwelle (5) bereitgestellt ist, die sich in einer Längsrichtung des Kühlzylinders (4) erstreckt; und
eine Schnecke (6a), die an einem vorderen Ende des Rührflügels (6) bereitgestellt ist, wobei das Verfahren Folgendes umfasst:
einen Herstellungsschritt des Eiskonfekts durch kontinuierliches Rühren und Kühlen von Zutaten des Eiskonfekts im Inneren des Kühlzylinders (4), während sich der Eiskonfekt-Zufuhrweg (2c) in einem geschlossenen Zustand befindet, wobei das Rühren von dem Rührflügel (6) ausgeführt wird;
einen Halteschritt des Eiskonfekts durch regelmäßiges Rühren und Kühlen des Eiskonfekts im Inneren des Kühlzylinders (4) durch den Rührflügel (6), während sich der Eiskonfekt-Zuführweg (2c) in dem geschlossenen Zustand befindet;
einen Extrudierschritt des Eiskonfekts durch Herauspressen des Eiskonfekts aus dem Eiskonfekt-Zuführweg (2c), während sich der Eiskonfekt-Zuführweg (2c) in einem geöffneten Zustand befindet, wobei das Eiskonfekt extrudiert wird, während das Eiskonfekt im Inneren des Kühlzylinder (4) durch Drehen des Rührflügels (6) gerülrt wird; und
einen Zirkulationsschritt des Eiskonfekts durch Zirkulierenlassen des Eiskonfekts in dem Eiskonfekt-Zuführweg (2c) über einen Eiskonfekt-Zirkulationsweg (2d) zu dem Kühlzylinder (4) während des Herstellungsschrittes und des Halteschrittes, wobei der Eiskonfekt-Zirkulationsweg (2d) von dem Eiskonfekt-Zuführweg (2c) stromaufwärts von einer Öffnungs- bzw. Schließposition abzweigt und mit dem Inneren des Kühlzylinders verbunden ist,
wobei die Öffnungs- bzw. Schließmittel an einem Öffnungsabschnitt des Eiskonfekt-Zuführwegs (2c) bereitgestellt sind, wobei sich der Öffnungsabschnitt nach außen öffnet,
wobei das Eiskonfekt durch den Zirkulationsschritt zirkuliert lassen wird, um das Eiskonfekt, das durch den Einfluss einer Luftaußentemperatur in dem Eiskonfekt-Zuführweg (2c) zu schmelzen begonnen hat, in dem Kühlzylinder (4) erneut zu kühlen,
wobei der Eiskonfekt-Zirkulationsweg (2d) eine Umgehung (2d) und eine weiterführende Umgehung (5a) aufweist,
wobei der Eiskonfekt-Zirkulationsweg (2d) eine Position in der Nähe der Öffnungs- bzw. Schließmittel (3) für den Eiskonfekt-Zuführweg (2c) mit einer Position auf einer im Vergleich zu der Schnecke (6a) für den Rührflügel (6) im Inneren des Kühlzylinders (4) in Bezug auf die Vorrichtung für die Herstellung von Eiskonfekt weiter hinten liegenden Seite verbindet,
wobei eine erste Einführöffnung (9) an dem Ende des Rührflügels (6) auf der Vorderseite der Vorrichtung derart bereitgestellt ist, dass sie von der Schnecke (6a) umschlossen wird, eine zweite Einführöffnung (10) an einem Ende des Rührflügels (6) auf der hinteren Seite der Vorrichtung bereitgestellt ist, wobei die erste Einführöffnung (9) und die zweite Einführöffnung (10) zum Einführen und Anordnen der Drehwelle (5) dienen,
wobei die Drehwelle (5) einen Querschnitt aufweist, in dem plattenähnliche Teile aus der Mitte nach außen hervorstehen.

6. Verfahren zur Herstellung von Eiskonfekt nach Anspruch 5, wobei:
das Eiskonfekt eine Softeiscreme ist.

## Revendications

1. Dispositif de production de crème glacée (1) comprenant :
un cylindre réfrigérant (4) pour stocker de la crème glacée ;
un moyen d'extrusion de crème glacée (6, 6a) pour pousser la crème glacée dans le cylindre réfrigérant (4) en appliquant une forme de compression sur la crème glacée ;
un passage de délivrance de crème glacée (2c) pour délivrer la crème glacée vers l'extérieur ;
un moyen d'ouverture-fermeture (3) pour ouvrir ou fermer le passage de délivrance de crème glacée (2c) ; et
un passage de mise en circulation de crème glacée (2d) qui se ramifie depuis le passage de délivrance de crème glacée (2c) en amont d'une position ouverte-fermée du moyen d'ouverture-fermeture (3) et est connecté à l'intérieur du cylindre réfrigérant, pour renvoyer la crème glacée à l'intérieur du cylindre réfrigérant (4) lorsque le passage de délivrance de crème glacée (2c) est fermé par le moyen d'ouverture-fermeture (3),
le moyen d'ouverture-fermeture (3) étant prévu au niveau d'une section d'ouverture du passage de délivrance de crème glacée (2c), laquelle section d'ouverture s'ouvre sur l'extérieur,
le moyen d'extrusion de crème glacée incluant :
une pale de mélange (6) prévue en forme spiralée autour d'un arbre de rotation (5) s'étendant dans un sens longitudinal du cylindre réfrigérant (4) ; et
une vis (6a) prévue à une extrémité avant de la pale de mélange (6),
le passage de mise en circulation de crème glacée (2d) incluant une dérivation (2d) et une dérivation en extension (5a),
le passage de mise en circulation de crème glacée (2d) connectant une position à proximité du moyen d'ouverture-fermeture (3) du passage de délivrance de crème glacée (2c) à position sur une autre face arrière comparativement à la vis (6a) pour la pale de mélange (6) à l'intérieur du cylindre réfrigérant (4) par rapport au dispositif de production de crème glacée,
un premier port d'insertion (9) étant prévu à l'extrémité de la pale de mélange (6) sur la face avant du dispositif de manière à être entouré par la vis (6a), un second port d'insertion (10) étant prévu à une extrémité de la pale de mélange (6) sur la face arrière du dispositif, le premier port d'insertion (9) et le second port d'insertion (10) servant à insérer et positionner l'arbre de rotation (5), et
l'arbre de rotation (5) ayant une section transversale dans laquelle les pièces en forme de plaques saillent du centre vers l'extérieur.

2. Dispositif de production de crème glacée (1) selon la revendication 1, comprenant en outre :
un élément couvercle (2) destiné à sceller une surface terminale avant du cylindre réfrigérant (4) et qui est ouvrant ; et
au moins une partie du passage de délivrance de crème glacée (2c) ou du passage de mise en circulation de crème glacée (2d) étant intégrée dans l'élément couvercle (2).

3. Dispositif de production de crème glacée (1) selon la revendication 2, dans lequel :
une pluralité de cylindres réfrigérants (4) sont prévus ;
l'élément couvercle (2) est conçu pour sceller chaque surface terminale de la pluralité de cylindres réfrigérants (4) par lui-même et est ouvrant ;
sont prévus au moins deux passages ramifiés de crème glacée (2c'), qui se ramifient respectivement depuis au moins deux d'une pluralité de passages de délivrance de crème glacée (2c) s'étendant respectivement depuis la pluralité de cylindres réfrigérants (4) et fusionnent ensemble à un point de fusion ;
un moyen d'ouverture-fermeture indépendant (3) et un port d'extrusion de crème glacée sont prévus au point de fusion ; et
les passages de circulation de crème glacée (2d) se ramifient respectivement depuis les passages ramifiés de crème glacée (2c') en amont du point de fusion.

4. Dispositif de production de crème glacée (1) selon la revendication 2 ou 3, dans lequel :
l'arbre de rotation (5) a une extrémité avant attachée à et supportée par l'élément couvercle (2) ;
le passage de mise en circulation de crème glacée (2d) a une section d'ouverture de connexion s'ouvrant sur l'élément couvercle (2) en direction du cylindre réfrigérant (4) ;
la section d'ouverture de connexion est formée dans une zone correspondant à une zone de fixation de l'arbre de rotation (5) dans l'élément couvercle (2) ;
la dérivation en extension est formée à l'extrémité avant de l'arbre de rotation (5) ; et
la crème glacée se trouvant dans le passage de mise en circulation de crème glacée (2d) dans l'élément couvercle (2) est renvoyée vers l'intérieur du cylindre réfrigérant (4) via la dérivation en extension.

5. Procédé de production de crème glacée en utilisant un dispositif de production de crème glacée (1) pour pousser la crème glacée dans un cylindre réfrigérant (4) par un moyen d'extrusion de crème glacée vers un passage de délivrance de crème glacée (2c) qui est ouvrant et fermant,
le moyen d'extrusion de crème glacée incluant :
une pale de mélange (6) prévue en forme spiralée autour d'un arbre de rotation (5) s'étendant dans un sens longitudinal du cylindre réfrigérant (4) ; et
une vis (6a) prévue à une extrémité avant de la pale de mélange (6),
ce procédé comprenant :
une étape de production de la crème glacée en mélangeant et réfrigérant en continu les ingrédients de la crème glacée dans le cylindre réfrigérant (4) pendant que le passage de délivrance de crème glacée (2c) est en état fermé, le mélange étant effectué par une pale de mélange (6) ;
une étape de rétention de la crème glacée en mélangeant et réfrigérant périodiquement la crème glacée dans le cylindre réfrigérant (4) à l'aide d'une pale de mélange (6) pendant que le passage de délivrance de crème glacée (2c) est en état fermé ;
une étape d'extrusion de la crème glacée en poussant la crème glacée hors du passage de délivrance de crème glacée (2c) pendant que le passage de délivrance de crème glacée (2c) est en état ouvert, la crème glacée étant extrudée pendant que la crème glacée est mélangée dans le cylindre réfrigérant (4) en faisant tourner la pale de mélange (6) ; et
une étape de mise en circulation de la crème glacée en mettant la crème glacée en circulation dans le passage de délivrance de crème glacée (2c) via un passage de mise en circulation de crème glacée (2d) vers le cylindre réfrigérant (4) pendant l'étape de production et l'étape de rétention, le passage de mise en circulation de crème glacée (2d) se ramifiant depuis le passage de délivrance de crème glacée (2c) en amont d'une position ouverte-fermée et étant connecté à l'intérieur du cylindre réfrigérant,
le moyen d'ouverture-fermeture étant prévu au niveau d'une section d'ouverture du passage de délivrance de crème glacée (2c), laquelle section d'ouverture s'ouvre sur l'extérieur,
l'étape de mise en circulation mettant la crème glacée en circulation de manière à re-réfrigérer dans le cylindre réfrigérant (4) la crème glacée qui a commencé à fondre dans le passage de délivrance de crème glacée (2c) sous l'influence de la température de l'air extérieur,
le passage de mise en circulation de crème glacée (2d) incluant une dérivation (2d) et une dérivation en extension (5a),
le passage de mise en circulation de crème glacée (2d) connectant une position à proximité du moyen d'ouverture-fermeture (3) pour le passage de délivrance de crème glacée (2c) à une position sur une autre face arrière comparativement à la vis (6a) pour la pale de mélange (6) dans le cylindre réfrigérant (4) par rapport au dispositif de production de crème glacée,
un premier port d'insertion (9) étant prévu à l'extrémité de la pale de mélange (6) sur la face avant du dispositif de manière à être entouré par la vis (6a), un second port d'insertion (10) étant prévu à une extrémité de la pale de mélange (6) sur la face arrière du dispositif, le premier port d'insertion (9) et le second insertion port (10) servant à insérer et positionner l'arbre de rotation (5),
l'arbre de rotation (5) ayant une section transversale dans laquelle les pièces en forme de plaques saillent du centre vers l'extérieur.

6. Procédé de production de crème glacée selon la revendication 5, dans lequel :
la crème glacée est une crème glacée servie molle.
